# EUROPEAN PATENT APPLICATION

(11) **EP 3 873 050 A1**
(43) Date of publication of application: **01.09.2021**
(21) Application number: 19922537.6
(22) Date of filing: 29.03.2019
(51) Int. Cl.: H04L 29/06, H04L 12/741

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN)
(74) Representative: Penza, Giancarlo
(86) International application number: PCT/CN2019/080504
(87) International publication number: WO 2020/198966

(57) **Abstract**

A wireless communication method and device, the method comprising: a compressor-side device receiving first configuration information for configuring a header compression parameter of an Ethernet frame header, and the compressor-side device compressing an Ethernet frame header of a data packet according to the first configuration information.

## Description

### Technical Field

Embodiments of the present application relate to the field of communications, and in particular to a wireless communication method and a device.

### Background

In Long Term Evolution (LTE) systems, a type of Protocol Data Unit (PDU) session is an Internet Protocol (IP) type.

In New Radio (NR) systems, not only an IP packet type is supported, but also an Ethernet frame type is introduced.

In this case, how to implement compression of an Ethernet frame header is a problem to be solved urgently.

### Summary

Embodiments of the present application provide wireless communication methods and devices, which can implement compression of an Ethernet frame header according to first configuration information.

In a first aspect, there is provided a wireless communication method including: a compression end device receives first configuration information, wherein the first configuration information is used for configuring a header compression parameter of an Ethernet frame header; and the compression end device compresses an Ethernet frame header of a data packet according to the first configuration information.

In a second aspect, there is provided a wireless communication method including: a decompression end device receives first configuration information sent by a first device, wherein the first configuration information is used for configuring a header compression parameter of an Ethernet frame header; and the decompression end device decompresses an Ethernet frame header of a received data packet according to the first configuration information.

In a third aspect, there is provided a wireless communication method including: a first device sending first configuration information to a compression end device and/or a decompression end device, wherein the first configuration information is used for configuring a header compression parameter of an Ethernet frame header.

In a fourth aspect, there is provide a wireless communication device, which is configured to perform the method according to the first aspect described above or any possible implementation mode of the first aspect. Specifically, the device includes units for executing the method according to the first aspect described above or any possible implementation mode of the first aspect.

In a fifth aspect, there is provide a wireless communication device, which is configured to perform the method according to the second aspect described above or any possible implementation mode of the second aspect. Specifically, the device includes units for executing the method according to the second aspect described above or any possible implementation mode of the second aspect.

In a sixth aspect, there is provide a wireless communication device, which is configured to perform the method according to the third aspect described above or any possible implementation mode of the third aspect. Specifically, the device includes units for executing the method according to the third aspect described above or any possible implementation mode of the third aspect.

In a seventh aspect, there is provided a wireless communication device including a processor and a memory. The memory is used configured to store a computer program, and the processor is configured to call and run the computer program stored in the memory to execute the method according to the first aspect described above or various implementation modes of the first aspect.

In an eighth aspect, there is provided a wireless communication device including a processor and a memory. The memory is configured to store a computer program, and the processor is configured to call and run the computer program stored in the memory to execute the method according to the second aspect described above or various implementation modes of the second aspect.

In a ninth aspect, there is provided a wireless communication device including a processor and a memory. The memory is configured to store a computer program, and the processor is configured to call and run the computer program stored in the memory to execute the method according to the third aspect described above or various implementation modes of the third aspect.

In a tenth aspect, there is provided a chip configured to implement the methods according to any one of the first to third aspects described above or various implementation modes of the first to third aspects.

Specifically, the chip includes a processor configured to call and run a computer program from a memory, so that a device in which the chip is installed executes the methods according to any one of the first to third aspects described above or various implementation modes of the first to third aspects.

In an eleventh aspect, there is provided a computer readable storage medium configured to store a computer program that causes a computer to execute the methods according to any one of the first to second aspects described above or various implementation modes of the first and second aspects.

In a twelfth aspect, there is provided a computer program product including computer program instructions that cause a computer to execute the methods according to any one of the first to third aspects described above or various implementation modes of the first to third aspects.

In a thirteenth aspect, there is provided a computer program, which, when being run on a computer, causes the computer to execute the methods according to any one of the first to third aspects described above or various implementation modes of the first to third aspects.

Based on the above technical solution, the compression end device determines the header compression parameter of the Ethernet frame header according to the first configuration information, such that a header compression function of the Ethernet frame can be realized, further reducing resource overhead of the air interface and improving the resource utilization rate.

### Brief Description of Drawings

FIG. 1 is a schematic diagram of an application scenario according to an embodiment of the present application.
FIGS. 2 to 4 are schematic diagrams of several typical frame formats of an Ethernet frame.
FIG. 5 is a schematic flowchart of a wireless communication method according to an embodiment of the present application.
FIG. 6 is a schematic flowchart of another wireless communication method according to an embodiment of the present application.
FIG. 7 is a schematic diagram of still another wireless communication method according to an embodiment of the present application.
FIG. 8 is a schematic block diagram of a wireless communication device according to an embodiment of the present application.
FIG. 9 is a schematic block diagram of another wireless communication device according to an embodiment of the present application.
FIG. 10 is a schematic block diagram of still another wireless communication device according to an embodiment of the present application.
FIG. 11 is a schematic block diagram of a communication device according to an embodiment of the present application.
FIG. 12 is a schematic block diagram of a chip according to an embodiment of the present application.
FIG. 13 is a schematic block diagram of a communication system according to an embodiment of the present application.

### Detailed Description

Technical solutions in embodiments of the present application will be described below in combination with the drawings in the embodiments of the present application. It is apparent that the embodiments described are just some of the embodiments of the present application, but not all of the embodiments of the present application. Based on the embodiments of the present application, all other embodiments achieved by a person of ordinary skill in the art without paying inventive efforts shall fall within the protection scope of the present application.

The technical solutions in the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, a LTE Time Division Duplex (TDD) system, a Universal Mobile Telecommunications System (UMTS), a Worldwide Interoperability for Microwave Access (WiMAX) communication system or a 5G system, etc.

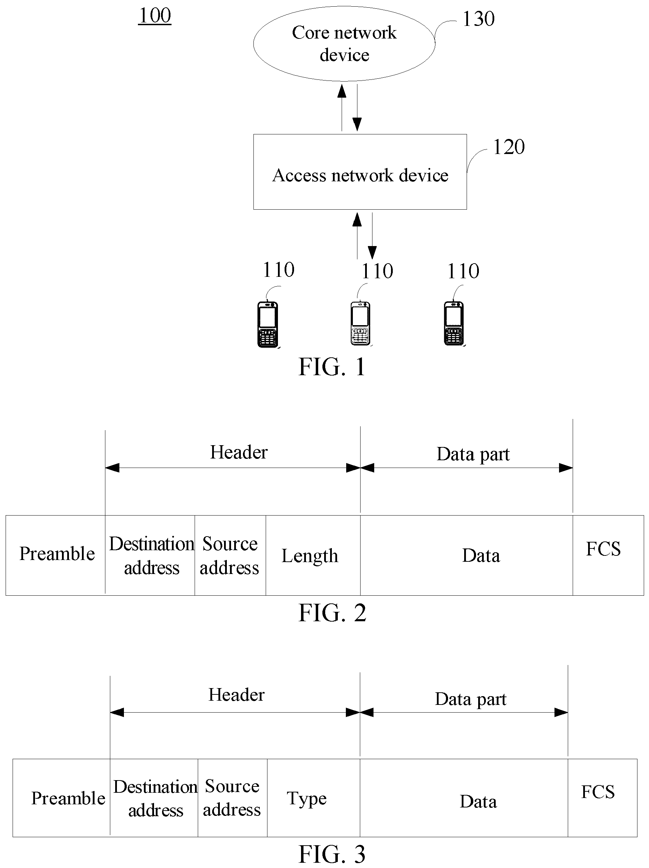

Illustratively, a communication system 100 applied in an embodiment of the present application is as shown in FIG. 1. The communication system 100 may include terminal devices 110. The terminal devices 110 may be located within a coverage range of an access network device 120. The "terminal device" as used herein includes, but not limited to, a device configured to be connected via a wired circuit, for example, via a public switched telephone network (PSTN), a digital subscriber line (DSL), a digital cable, a direct cable; and/or another data connection/network; and/or via a wireless interface, for instance, for a cellular network, a wireless local area network (WLAN), a digital television network such as a handheld digital video broadcasting-handheld (DVB-H) network, a satellite network, and an amplitude modulation - frequency modulation (AM-FM) broadcast transmitter; and/or an apparatus of another terminal configured to receive/transmit communication signals; and/or an Internet of Things (IoT) device. A terminal device configured to communicate via a wireless interface may be referred to as "a wireless communication terminal", "a wireless terminal" or "a mobile terminal". Examples of the mobile terminal include, but not limited to, a satellite or cellular phone; a personal communication system (PCS) terminal capable of combining a cellular radio phone with data processing, faxing, and data communication abilities; a personal digital assistant (PDA) that may include a radio phone, a pager, internet/intranet access, a Web browser, a memo pad, a calendar, and/or Global Positioning System (GPS) receiver; and a conventional laptop and/or palmtop receiver or other electronic devices including a radio phone transceiver. The terminal device may refer to an access terminal, user equipment (UE), a subscriber unit, a subscriber station, a mobile station, a rover station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing devices connected to a wireless modem, a vehicle-mounted device, a wearable device, a terminal device in a 5G network, or a terminal device in a future evolved Public Land Mobile Network (PLMN).

The communication system 100 may include an access network device 120. The access network device 120 may be a device that communicates with terminal devices 110 (or referred to as communication terminals, or terminals). The access network device 120 may provide communication coverage for a specific geographical area, and may communicate with terminal devices located within the coverage area. Optionally, the access network device 120 may be a Base Transceiver Station (BTS) in a GSM system or CDMA system, or a NodeB (NB) in a WCDMA system, or an Evolutional Node B (eNB or eNodeB) in an LTE system, or a radio controller in a Cloud Radio Access Network (CRAN), or the access network device may be a mobile switching center, a relay station, an access point, a vehicle-mounted device, a wearable device, a hub, a switch, a bridge, a router, a network side device in a 5G network, or a network device in a future evolved Public Land Mobile Network (PLMN).

The wireless communication system 100 further includes a core network device 130 that communicates with the access network device. Optionally, the core network device 130 may be a 5G core network device, for example, an Access and Mobility Management Function (AMF) device, which is responsible for access and mobility management, and has functions such as authentication, handover and location update for users, etc. As another example, the core network device 130 may be a Session Management Function (SMF) device, which is responsible for session management, including establishment, modification and release of packet data unit (PDU) sessions, etc. As another example, the core network device 130 may be a user plane function (UPF) device, which is responsible for forwarding user data. Here, the core network device may be a core network device of an LTE system or other systems.

Optionally, the 5G system or 5G network may be referred to as a New Radio (NR) system or a NR network.

It should be understood that the terms "system" and "network" are often used interchangeably herein. The term "and/or" herein describes an association relation between associated objects only, indicating that three relations may exist, for example, A and/or B may indicate three cases: A alone, both A and B, and B alone. In addition, the symbol "/" herein generally indicates that there is a "or" relation between the associated objects before and after "/".

Optionally, the embodiments of the present application may be applied to a public land network or a local network.

The public land network may be a PLMN-based public land network.

The local network may also be referred to as a local area network or a private network. The local network is usually laid out in scenarios of office, home and factory, so as to realize a more effective and safe management. The local network is usually laid out by local users or administrators. Generally, authorized accessible users have the right to access the local network.

The local network may be or may not be managed or administered by a public land network.

Optionally, the local network may use unauthorized frequency bands for communication, or may share authorized frequency bands with the public land network.

Optionally, the local network may be a network pertaining to the 3GPP category. A core network of the local network may be a core network of NR or LTE, and the local network may have access to the core network through an NR access network, an LTE access network or Wireless Fidelity (WiFi).

Optionally, in embodiments of the present application, the core network may be shared by the public land network and the local network, while the access network is independent; or the access network may be shared, while the core network is independent; or both the access network and the core network may be shared; or neither the access network nor the core network is shared.

Optionally, in embodiments of the present application, the core network may be shared by multiple or multiple types of local networks, while the access network is independent; or the access network may be shared and the core network is independent; or both the access network and the core network may be shared; or neither the access network nor the core network is shared.

In an NR system, not only an IP type is supported, but also an Ethernet frame type is introduced. For a PDU layer, when a type of a PDU session is IPv4, IPv6 or IPv4v6, the PDU session corresponds to IPv4 packets and/or IPv6 packets. When a type of a PDU session is the Ethernet frame type, the PDU session corresponds to Ethernet frames.

Frame formats of an Ethernet frame related to the embodiments of the present application will be described below in conjunction with FIGS. 2 to 4.

In a frame format in FIG. 2, an Ethernet frame header may include multiple fields (or called sub-headers), such as a destination address field, a source address field and a length field, and a data part may include data. In addition, the Ethernet frame header further includes two parts that are not transmitted in the 5G network, i.e., a preamble and a frame check sequence (FCS). The Ethernet frame shown in FIG. 2 may be of Ethernet 802.3 raw frame type.

In a frame format in FIG. 3, an Ethernet frame header may include multiple fields, such as a destination address field, a source address field and a type field, and a data part may include data. In addition, the Ethernet frame header further includes two parts that are not transmitted in the 5G network, i.e., a preamble and a frame check sequence (FCS), are also included. The Ethernet frame shown in FIG. 3 may be of Ethernet II frame type.

In the NR system, a public network system, i.e., a PLMN-based public land network, is usually deployed. At the same time, in some scenarios, such as in an office scene, at home scene, in a factory and the like, the local network is usually laid out by local users or administrators in order to realize a more effective and safe management. Only authorized accessible users have the right to access the local network.

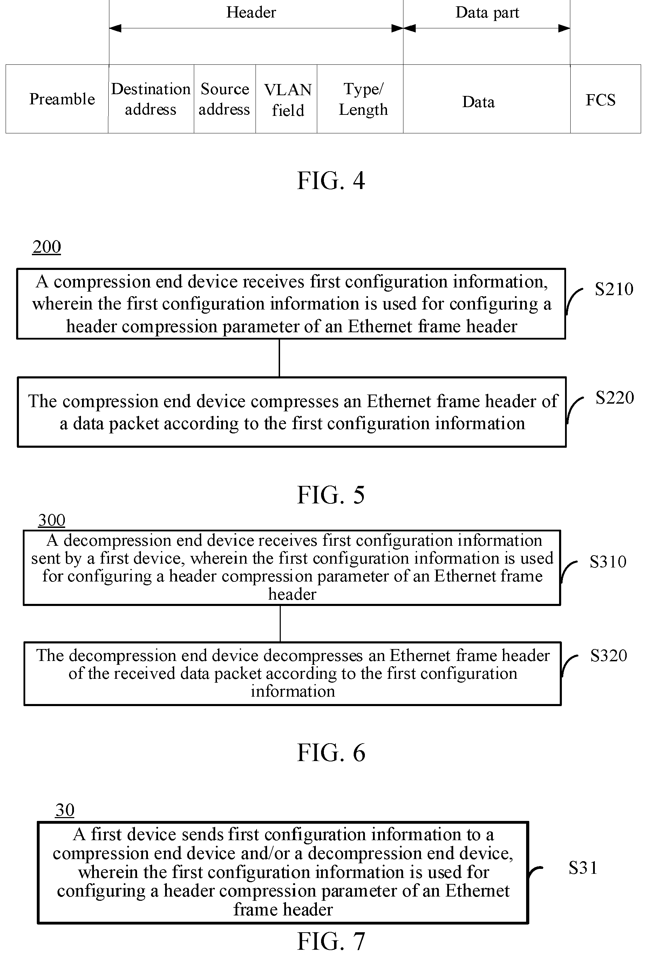

In a scenario where a public network system and a local network coexist, when a PDU session is of Ethernet frame type, an Ethernet PDU may carry a Virtual Local Area Network (VLAN) field, or may not carry a VLAN prefix, and corresponding Ethernet frames are different. As shown in FIG. 4, in the frame format shown in FIG. 2 or FIG. 3, a VLAN field is added, which can be used for indicating information of a VLAN to which the Ethernet frame belongs.

It should be understood that the frame formats shown in FIGS. 2 to 4 are described by way of example only, and should not be construed as specific limitations on the embodiments of the present application.

It should also be understood that various implementation modes of the embodiments of the present application may also be applied to other types of frames besides Ethernet frames, which will not be repeated herein in the embodiments of the present application for sake of brevity.

FIG. 5 is a schematic flowchart of a wireless communication method 200 according to an embodiment of the present application. The method 200 includes at least part of the following contents.

In S210, a compression end device receives first configuration information, wherein the first configuration information is used for configuring a header compression parameter of an Ethernet frame header.

In S220, the compression end device compresses the Ethernet frame header of a data packet according to the first configuration information.

It should be understood that the method 200 may be used for downlink transmission, uplink transmission, or sidelink transmission. When the method 200 is used for downlink transmission, the compression end device may be an access network device, and a decompression end device may be a terminal device. When the method is used for uplink transmission, the compression end device may be a terminal device, and the decompression end device may be an access network device. When the method 200 is used for sidelink transmission, the compression end device may be a terminal device and the decompression end device may also be a terminal device.

Optionally, in an embodiment of the present application, the data packet is a data packet to be sent by the compression end device to the decompression end device, whose packet header is of Ethernet frame type, for example, the Ethernet frames shown in FIGS. 2 to 4. The compression end device may determine whether to compress the packet header, i.e., the Ethernet frame header (which may optionally further include a VLAN field) of the data packet according to the received first configuration information. In a case that the Ethernet frame header needs to be compressed, the compression end device may also determine, according to the first configuration information, a compression mode of the Ethernet frame header, i.e., how a header compression is performed, for example, which fields in the Ethernet frame header are to be compressed, which context ID's corresponding sub-object channel a data packet are to be mapped to, etc.

It should be understood that in the embodiment of the present application, the description is mainly made with the compression of the Ethernet frame header of the data packet being taken as an example. In the embodiment of the present application, the data part in the data packet may also be compressed in the way of the compression the Ethernet frame header, or in other embodiments, the first configuration information may also be used for configuring a compression parameter of the data part of the data packet, for example, determining whether to determine the data part, determining a compression mode of the data part, such that the compression end device may also compress the data part of the data packet according to the compression parameter of the data part, and further send the compressed data packet to the decompression end device, which is not limited in embodiments of the present application.

It should be understood that in the embodiment of the present application, the description below is mainly made with the mapping of the Ethernet frame header of the data packet being taken as example, and in an embodiment of the present application, the data packet may also be mapped in a manner of mapping the Ethernet frame header.

Optionally, in some embodiments, the first configuration information may be preconfigured, or agreed by a protocol, or agreed by the compression end device and the decompression end device. In this case, the method 200 may not include act 210, and the compression end device and the decompression end device may compress or decompress the Ethernet frame header according to the preconfigured or agreed first configuration information.

Optionally, in some embodiments, the first configuration information may be partially preconfigured, or agreed by a protocol, or agreed by the compression end device and the decompression end device. In this case, the compression end device and the decompression end device may compress or decompress the Ethernet frame header at least according to part of the preconfigured or agreed first configuration information.

Optionally, in some other embodiments, the first configuration information may be configured by a first device for the compression end device. Optionally, the first device may also indicate the first configuration information to the decompression end device or configure the first configuration information for the decompression end device, so that according to the first configuration information, the decompression end device decompresses the compressed data packet sent by the compression end device.

Optionally, the first device may be an access network device, a core network device or an application layer device, such as a Data Network Node (DNN) and the like.

For example, if the first device is an access network device and the compression end device is a terminal device, in such a case, the first device may configure the header compression parameter for the compression end device through a Radio Resource Control (RRC) message, or the first device may also send the first configuration information to the compression end device through other messages, such as a Media Access Control (MAC) Control Clement (CE) or a downlink message, e.g. Downlink Control Information (DCI).

For another example, if the first device is a core network device and the compression end device is a terminal device, in such a case, the core network device may configure the header compression parameter for the compression end device through a message between the terminal device and the core network, such as a Non-Access Stratum (NAS) message.

As another example, if the first device is a core network device and the compression end device is a terminal device, in such a case, the core network device may inform the access network device of the information through a message between the terminal device and the core network, such as a Non-Access Stratum (NAS) message, and then the access network device configures the header compression parameter for the compression end device through an Access Stratum (AS) message, such as an RRC message.

As a further example, if the first device is a core network device and the compression end device is an access network device, in such a case, the core network device may configure the header compression parameter for the access network device through a message between the access network device and the core network device, such as an N2 message. Optionally, if the terminal device is a decompression end device, the header compression parameter may be indicated to or configured for the terminal device through an AS message or a NAS message, that is, it may be indicated to or configured for the terminal device by the access network device or the core network device.

Optionally, in some embodiments, the header compression parameter includes at least one of:
a header compression ID of an Ethernet frame header, wherein the header compression ID is used for indicating whether to compress the Ethernet frame header;
a virtual local area network (VLAN) field indication, which is used for indicating whether to perform header compression on a VLAN field or whether the Ethernet frame header contains the VLAN field;
information of sub-headers to be compressed, that is, which sub-headers or fields in the Ethernet frame header need to be compressed;
field type information for header compression, which is used for indicating a type of sub-headers to be compressed;
the maximum number of context identifiers IDs, which is used for indicating the maximum number of sub-object channels to which a data packet corresponding to a header compression object can be mapped, the header compression object is used for indicating a unit on which the header compression is performed,
wherein each sub-channel has its corresponding context, in other words, the context corresponds to the sub-object channel to which the data packet corresponding to the header compression object can be mapped, or the context corresponds to the sub-object channel to which the data packet corresponding to the header compression object can be mapped only for each header compression configuration/ID;
a feedback mode, which is used for indicating a feedback mode used by the decompression end device; and
a header compression mode, which is used for indicating whether to perform a transition of a compression state according to the feedback mode.

Specifically, the header compression ID of the Ethernet frame header may be used for indicating whether to compress the Ethernet frame header. If the Ethernet frame header is not to be compressed, the compression end device may not compress the Ethernet frame header of the data packet, or may not compress an Ethernet frame header of a data packet corresponding to a target object/path, or may not compress an Ethernet frame header corresponding to a data packet configured by the first configuration information, i.e., send a data packet including a complete Ethernet frame header to the decompression end device, at which point it is considered that the compression state of the compression end device is an uncompressed state; or if the Ethernet frame header is to be compressed, the compression end device may also determine the compression mode of the Ethernet frame header in combination with other information in the first configuration information, which will be further described below.

The VLAN field indication is used for indicating whether to perform header compression on a VLAN field or whether the Ethernet frame header contains a VLAN field. Optionally, whether to perform header compression on the VLAN field may be indicated by different IDs, and whether the Ethernet frame header contains the VLAN field may also be indicated by different IDs. Therefore, the compression end device may determine a compression strategy for Ethernet frame header including a VLAN field and a compression strategy for Ethernet frame header excluding a VLAN field according to the VLAN field indication; or the compression end device may determine whether to perform header compression on the VLAN field according to the VLAN field indication; or the compression end device may determine or distinguish, according to the VLAN field indication, an Ethernet frame header including a VLAN field and an Ethernet frame header excluding a VLAN field when it is determined to compress the Ethernet frame header; or the compression end device may determine, according to the VLAN field indication, a compression strategy for an Ethernet frame header including a VLAN field and a compression strategy for an Ethernet frame header excluding a VLAN field when compressing the Ethernet frame header.

In an implementation mode, the VLAN field indication may include two indications, i.e., Ethernet/VLAN and an Ethernet, wherein Ethernet/VLAN indicates an Ethernet frame including a VLAN field, and Ethernet indicates an Ethernet frame excluding a VLAN field. If the VLAN field indication is Ethernet/VLAN, that is, the Ethernet frame header includes a VLAN field, the compression end device may perform header compression on the data packet including the VLAN field according to a header compression configuration corresponding to this indication; or if the VLAN field indication is Ethernet, the compression end device may perform header compression on the data packet excluding the VLAN field according to a header compression configuration corresponding to this indication. That is, different header compression parameters may be configured for data packets including a VLAN field and data packets excluding a VLAN field.

In an implementation mode, the VLAN field indication may include two indications, i.e., Ethernet/VLAN and Ethernet, wherein Ethernet/VLAN indicates an Ethernet frame including a VLAN field, and Ethernet indicates an Ethernet frame excluding a VLAN field. If the VLAN field indication is Ethernet/VLAN, that is, the Ethernet frame header includes a VLAN field, the compression end device may map data packets into sub-object channels corresponding to different context IDs; or if the VLAN field indication is Ethernet, the compression end device may map data packets into sub-object channels corresponding to different context IDs (e.g., map a data packet including a VLAN field to one sub-object channel and map a data packets excluding a VLAN field to another sub-object channel), or the compression end device may not map the data packets into sub-object channels corresponding to different context IDs (e.g., consider whether to compress the VLAN field or not to perform the header compression on the VLAN field).

In another implementation mode, the VLAN field indication may include Ethernet, indicating compression of the Ethernet frame header, no matter whether the Ethernet frame header includes a VLAN field or not.

Optionally, in an embodiment of the present application, the VLAN field, which may also be referred to as a Q-tag, may include a customer tag (C-tag), also called as a Customer VLAN field, and a service tag (S-tag), also as called a Service VLAN field, or may also include other information, which is not limited in embodiments of the present application.

Particularly, in an embodiment of the present application, the compression end device may also perform header compression on only part of sub-headers in the VLAN field.

The field type information for header compression is used for indicating a type of sub-headers to be compressed. As an example but not limitation, the field type information for header compression includes at least one of:
a static class, a static-known class, a static-def class, an inferred class, a changing class, and an unchanging class.

For example, the first configuration information may configure that header compression is performed on a specific type of sub-headers, for example, the header compression is performed on sub-headers of the unchanging class. Optionally, the unchanging class may include a static class, a static-known class, a static-def class and an inferred class, or the unchanging class may also include some classes of a static class, a static-known class, a static-def class and an inferred class.

Optionally, information of sub-headers to be compressed may include at least one of:
a destination address, a source address, an Ethernet type, an Ethernet length, a Tag Protocol ID (TP-ID), a Precedence Code Point (PCP), a Drop Eligible Indicator (DEI), and a VLAN ID.

The TR-ID may be used for indicating a frame type, for example, an 802.1Q tag frame, that is, an Ethernet frame including a VLAN field.

The PCP, or referred to as a Priority (PRI), may be used for indicating a priority of a frame. In case of network congestion, packets with high PCP priorities will be preferentially sent.

The DEI may be used for indicating a drop priority. In case of network congestion, packets with low drop priorities will be preferentially dropped.

Further, the compressible sub-headers may further include at least one of: a SubNetwork Access Protocol (SNAP) field and a Logical Link Control (LLC) field.

It should be understood that the sub-headers included in the above Ethernet frame header are only examples. With the update and development of standards, the sub-headers included in the Ethernet frame header may be deleted, or added, or their meanings may be updated. The meanings of the sub-headers in the embodiments of the present application may also be adjusted, which is not limited in the embodiments of the present application.

It should be understood that part of the information in the first configuration information may be preconfigured or determined by other information. For example, if the information of the sub-headers to be compressed is not configured in the first configuration information and the field type information for header compression is configured in the first configuration information, the information of the sub-headers to be compressed may be determined according to the field type information for header compression. For example, if the field type information for header compression is the unchanging class, the sub-headers to be compressed may not include at least one of a PCP and a type field, or if the field type information for header compression is the static class, the sub-headers to be compressed may include at least one of a source address field, a destination address field and a length field.

Optionally, in an embodiment of the present application, the feedback mode includes at least one of:
a mode in which a feedback data packet needs to be sent as a reply, a mode in which a feedback data packet does not need to be sent as a reply and a mode in which a feedback data packet needs to be sent as a reply under a specific condition.

Therefore, after receiving the compressed Ethernet frame sent by the compression end device, the decompression end device may decompress the Ethernet frame, and feed back a decompression result according to the feedback mode, wherein the decompression result may indicate whether the decompression is successful or a continuous decompression is successful or partial decompression is successful or continuous partial decompression is successful. For example, a feedback of Negative ACKnowledgement (NACK) is used for indicating a failure of complete decompression or a failure of partial decompression, or a feedback of Acknowledgement (ACK) is used for indicating a success of decompression. Optionally, the decompression result may also include a decompression result of a data packet with a corresponding sequence number (SN). Optionally, the decompression result may also include at least one of: an SN of a data packet corresponding to at least one ACK, an SN of a data packet corresponding to at least one ACK, a sequence number corresponding to the first data packet which is decompressed unsuccessfully, a sequence number corresponding to the last data packet which is decompressed successfully, a sequence number +1 corresponding to the last data packet which is decompressed successfully, etc.

Optionally, in an embodiment of the present application, the mode in which the feedback data packet needs to be sent as a reply under the specific condition may include at least one of: periodically feeding back, that is, feeding back according to a certain period, for example, decompression results of compressed data packets received in this period may be fed back in combination, so as to reduce signaling overhead;
feedback in the case that the data packet is decompressed erroneously, and feeding back the decompression result (which may include at least one of: indication of sending errors, specific error information and information of successful sending) when the data packet is decompressed erroneously is conducive to ensuring reliable transmission of data packets which are decompressed erroneously;
feedback in the case that the data packet is decompressed erroneously multiple times in a row, and feeding back the decompression result (which may include at least one of: indication of sending errors, specific error information and information of successful sending) when erroneous decompression of the data packet is repeated multiple times in a row is conducive to ensuring reliable transmission of data packets which are decompressed erroneously;
feedback in the case that a change in a compression state of the compression end device occurs, that is, when the compression state is switched from one compression state to another compression state, for example, when the compression state is switched from an uncompressed state to a compressed state, the change in the compression state of the compression end device shows that decompression of the data packet may have failed, in this case, feeding back the decompression result is conducive to ensuring reliable transmission of data packets which are decompressed erroneously;
when an uncompressed data packet is received;
when uncompressed data packets are received multiple times in a row;
receiving of a first instruction sent by the compression end device, wherein the first instruction is used for instructing the decompression end device to reply the feedback data packet;
feedback in the case that a change in a decompression state of the decompression terminal device occurs;
feedback in the case that a specific data packet is received;
when a compressed data packet with a compression efficiency lower than the current compression efficiency is received; and
when compressed data packets with compression efficiency lower than the current compression efficiency are received multiple times in a row.

Specifically, reference to the following related description of a state report sent by the decompression end device to the compression end device may be made below, which will not be repeated here for brevity.

Optionally, in an embodiment of the present application, the decompression result of a data packet decompressed by the decompression end device may be carried in a feedback data packet, which may be a feedback about at least part of the Ethernet frame header.

For example, the at least part is a variable part of the Ethernet frame header (e.g., a VLAN field, a length field and a type field, etc.), and/or a static part of the Ethernet frame header (e.g., a source address and a destination address, etc.).

For another example, the at least part is at least part of a variable part of the Ethernet frame header (e.g., a type field, etc.), and/or at least part of a static part of the Ethernet frame header (e.g., a source address and a destination address, etc.).

Optionally, in an embodiment of the present application, the compression end device may determine whether to perform a transition of the compression state according to the feedback mode. As an example but not limitation, the compression state includes at least one of: an uncompressed state, a partially compressed state and a fully compressed state. Optionally, the partially compressed state may be subdivided into a plurality of partially compressed states, such as a semi-compressed or 2/3 compressed state, or the compressed state may only include an uncompressed and a fully compressed state, which is not limited in embodiments of present application.

In the case that the feedback data packet is received, the compression end device may determine, according to the feedback data packet, the decompression result of the compressed data packet sent by it. If the decompression result indicates that at least part of the data packet is decompressed successfully, the compression end device may determine whether to perform the transition of the compression state, for example, the compression state is transited to a more reliable compression state for header compression, for example, the compression state is switched from a fully compressed state to a partially compressed state or an uncompressed state to ensure reliable transmission of the data packet.

The maximum number of the context IDs is used for indicating the maximum number of the sub-object channels to which data packets corresponding to the header compression object can be mapped, that is, the maximum number of the sub-object channels that may be distinguished for data packets of a certain header compression object. Optionally, when a first condition is met, the compression end device may map data packets corresponding to the same compression object into sub-object channels corresponding to different Context IDs, for example, data packets with different MAC addresses are mapped into sub-object channels corresponding to different context IDs, or data packets with the same MAC address are mapped into sub-object channels corresponding to the same context ID.

Optionally, the MAC address may be the source address and/or the destination address in the Ethernet frame header.

Optionally, in some embodiments, the header compression parameter is configured based on at least one of:
at least one QoS flow, at least one bearer, a terminal device and at least one PDU session.

That is to say, a granularity (or unit) of the header compression parameter according to the embodiment of the present application may be one Quality of Service (QoS) flow, or multiple QoS flows, or one bearer, or multiple bearers, or UE, or one PDU session, or, of course, multiple PDU sessions as a unit, which is not limited in embodiments of the present application.

It should be understood that the header compression parameter may also be configured based on a service type. For example, one header compression parameter is configured for a specific type of service, for example, a set of header compression parameters is configured for Enhance Mobile Broadband (eMBB), a set of header compression parameters is configured for Ultra-Reliable and Low Latency Communication (URLLC) to meet requirements of different services, or the header compression parameter may be configured based on other parameter configurations, which is not limited in embodiments of the present application.

Optionally, in an embodiment of the present application, the first configuration information is also used for configuring header compression object information corresponding to the header compression parameter, that is, the header compression is performed on data packets of which header compression objects using the header compression parameter. For example, the header compression object information includes at least one of:
at least one Quality of Service (QoS) flow ID, at least one bearer ID, at least one terminal device ID and at least one protocol data unit (PDU) session ID.

That is to say, the first configuration information may configure to use the header compression parameter to perform header compression on data packets corresponding to header compression objects, such as a QoS Flow corresponding to the at least one Quality of Service (QoS) flow ID or a bearer corresponding to at least one bearer ID, and a PDU session corresponding to the at least one PDU session ID. Therefore, when the data packets corresponding to these header compression objects need to be compressed, the compression end device may determine whether to perform the header compression according to the header configuration parameter, and further determine how to perform the header compression when the header compression is needed.

Therefore, the first configuration information may configure not only the header compression parameter of the Ethernet frame header, but also an object of the header compression parameter, so that the granularity of header compression can be more controllable, for example, can be at a bearer level, or can be finer, for example, can be at a QoS flow level for example.

It can be known from the above description that the Ethernet frame header may or may not include a VLAN field, or may include one VLAN field, or two or more VLAN fields. Based on the above situation, an embodiment of the present application further provides a mapping mode between the several types of Ethernet frame headers described above and context IDs.

Optionally, as an embodiment, the first configuration information is also used for configuring a mapping mode between context IDs and Ethernet frame headers including VLAN fields, or it may be considered that the first configuration information is used for indicating a mapping mode between context IDs and data packets including VLAN fields, that is, the same mapping mode may be used for the Ethernet frame headers and the data parts of the data packets.

In an implementation mode, the first configuration information may be used for configuring a mapping relation between context IDs and Ethernet frame headers including different numbers of VLAN fields. For example, the first configuration information is specifically used for configuring that:
an Ethernet frame header including one VLAN field is mapped to a sub-object channel corresponding to a first context ID, for example, an Ethernet frame header of a data packet including a Q-tag is mapped to a sub-object channel corresponding to context ID1; and
further, a data part of a data packet corresponding to the Ethernet frame header including one VLAN field is also mapped to the sub-object channel corresponding to the first context ID, for example, a data part of the data packet including the Q-tag is also mapped to the sub-object channel corresponding to the context ID 1.

An Ethernet frame header including two VLAN fields is mapped to a sub-object channel corresponding to a second context ID, for example, an Ethernet frame header of a data packet including two Q-tags is mapped to a sub-object channel corresponding to context ID2; and
further, a data part of a data packet corresponding to the Ethernet frame header including two VLAN fields is also mapped to the sub-object channel corresponding to the second context ID, for example, a data part of the data packet including two Q-tags is also mapped to the sub-object channel corresponding to the context ID2.

An Ethernet frame header excluding a VLAN field is mapped to a sub-object channel corresponding to a third context ID, for example, an Ethernet frame header of a data packet excluding a Q-tag is mapped to a sub-object channel corresponding to context ID3.

Further, a data part of a data packet corresponding to the Ethernet frame header excluding the VLAN field is also mapped to the sub-object channel corresponding to the third context ID, for example, a data part of the data packet excluding the Q-tag is also mapped to the sub-object channel corresponding to the context ID3.

Optionally, the first configuration information may also configure a mapping relation between context IDs and Ethernet frame headers including other numbers of VLAN fields, which is not limited in embodiments of the present application.

Optionally, as another embodiment, the first configuration information is also used for configuring respective mapping modes between context IDs and Ethernet frame headers including VLAN fields as well as Ethernet frame headers excluding a VLAN field, or it may be considered that the first configuration information is used for configuring mapping modes between context IDs and data packets including VLAN fields as well as data packets excluding a VLAN field, that is, the same mapping mode may be used for the Ethernet frame headers and data parts of the data packets.

In an implementation mode, the first configuration information is specifically used for configuring that:
an Ethernet frame header including a VLAN field is mapped to a sub-object channel corresponding to a first context ID, for example, an Ethernet frame header of a data packet including a Q-tag is mapped to a sub-object channel corresponding to context ID1; and
further, a data part of a data packet corresponding to the Ethernet frame header including the VLAN field is also mapped to the sub-object channel corresponding to the first context ID, for example, a data part of the data packet including the Q-tag is also mapped to the sub-object channel corresponding to the context ID 1.

An Ethernet frame header excluding a VLAN field is mapped to a sub-object channel corresponding to a third context ID, for example, an Ethernet frame header of a data packet excluding a Q-tag is mapped to a sub-object channel corresponding to context ID3; and
further, a data part of the data packet corresponding to the Ethernet frame header excluding the VLAN field is also mapped to the sub-object channel corresponding to the third context ID, for example, a data part of the data packet excluding the Q-tag is also mapped to the sub-object channel corresponding to the context ID3.

It can be seen from the above implementation modes that the first configuration information may configure the compression end device to map the Ethernet frame header into the sub-object channel corresponding to the corresponding context ID according to whether the Ethernet frame header contain a VLAN field or the mapping relation between the number of VLAN fields included and the context IDs. That is to say, the first configuration information may configure the compression end device to map the Ethernet frame header into the sub-object channel corresponding to the context ID configured by the first configuration information according to the specific situation of the VLAN field(s) in the Ethernet frame header.

Optionally, in some other embodiments, the first configuration information may configure the compression end device to use different sub-object channels to distinguish whether the Ethernet frame header of the corresponding data packet contains the VLAN field, or the number of VLAN fields included, in other words, the first configuration information configures the compression end device to perform the mapping of the sub-object channels according to whether the Ethernet frame header contains the VLAN field or the number of VLAN fields included, but which context ID's corresponding sub-object channels are mapped to is not limited specifically. However, the situations of the VLAN fields corresponding to the data packets mapped to the same sub-object channel are the same, that is, either all the data packets include the VLAN field, or none of the data packets includes the VLAN field, or all the data packets include one VLAN field, or all the data packets include two VLAN fields.

For example, the compression end device may map the data packets including the VLAN field which have the same MAC address into the same sub-object channel, e.g., the sub-object channel corresponding to context ID 1, and map the data packets excluding the VLAN field into the same sub-object channel, e.g., the sub-object channel corresponding to context ID 2. Correspondingly, the decompression end device may determine whether the Ethernet frame header includes the VLAN field according to the sub-object channel to which the Ethernet frame header is mapped. Here, information contents of the VLAN fields included may be the same or different.

For another example, the compression end device may map the data packets including one VLAN field which have the same MAC address to the same sub-object channel, e.g., the sub-object channel corresponding to context ID 1, map the data packets including two VLAN fields which have the same MAC address to the same sub-object channel, e.g., the sub-object channel corresponding to context ID 2, and map the data packets excluding VLAN field into the same sub-object channel, e.g., the sub-object channel corresponding to context ID 3. Correspondingly, the decompression end device may determine the number of VLAN fields included in the Ethernet frame header according to the sub-object channel to which the Ethernet frame header is mapped.

Further, the compression end device may also submit the compressed data packet downwards, process it at a PDCP and/or Radio Link Control (RLC) layer, and finally transmit it to the decompression end device through a physical layer.

In an embodiment of the present application, the compression end device may also control activation (or turn-on) or deactivation (or turn-off) of a header compression function of the Ethernet frame header. Further, header compression may be performed on the Ethernet frame header of the data packet according to the first configuration information when the header compression function of the Ethernet frame header is in the activated state. The header compression is not performed on the Ethernet frame header of the data packet when the header compression function of the Ethernet frame header is in the deactivation state.

An activation mode of the header compression function of the Ethernet frame header will be described below in combination with specific embodiments.
Embodiment 1: the compression end device activates the header compression function of the Ethernet frame header in a case that the first configuration information is received. For example, the compression end device may activate the header compression function of the Ethernet frame header when receiving an RRC message of a first device, wherein the RRC message includes the first configuration information.
Embodiment 2: the compression end device activates the header compression function of the Ethernet frame header in a case that a dedicated activation signaling can be received, that is, the compression end device activates the header compression function in a case that a displayed activation signaling is received.
   For example, the compression end device activates the header compression function of the Ethernet frame header in the case that a first activation signaling is received, wherein the first activation signaling is used for instructing the compression end device to activate the header compression function of the Ethernet frame header.
   Optionally, in some embodiments, the compression end device may be a terminal device, and the first activation signaling may be sent by the first device. In this case, the first activation signaling may be an RRC message, an MAC CE or DCI, or other downlink messages or downlink information.
Embodiment 3: the compression end device activates the compression function of the Ethernet frame header according to a preset rule.

Optionally, the preset rule may be agreed by a protocol, or may be agreed between the compression end device and the decompression end device, or may be preconfigured by a network device, which is not limited in embodiments of the present application.

For example, the preset rule may indicate that the header compression function of the Ethernet frame header is activated by default.

For another example, the preset rule indicates that a header compression function of Ethernet frame header of a specific terminal device is activated by default, wherein the specific terminal device may be a terminal device supporting or only supporting transmission of data packets of Ethernet frame type,.

As a further example, in some cases, the network device may configure a bearer to perform header compression using a Robust Header Compression (RoHC) mode. In this case, the preset rule indicates that a header compression function of an Ethernet frame header of the bearer with the RoHC mode unconfigured is activated by default, so that the header compression may be performed on data packets of such bearer using the header compression function of the Ethernet frame header.

Optionally, in some embodiments, the compression end device may also control the deactivation of the header compression function of the Ethernet frame header. Optionally, the compression end device may also deactivate the header compression function in the case that a dedicated deactivation signaling is received.

For example, the compression end device deactivates the header compression function of the Ethernet frame header in the case that a first deactivation signaling is received, wherein the first deactivation signaling is used for instructing the compression end device to deactivate the header compression function of the Ethernet frame header.

Optionally, in some embodiments, the compression end device may be a terminal device, and the first deactivation signaling may be sent by the first device. In this case, the first deactivation signaling may be an RRC message, an MAC CE or DCI, or other downlink messages or downlink information.

The wireless transmission method according to the embodiment of the present application is described in detail above from the perspective of a compression end device with reference to FIG. 5. A wireless communication method according to another embodiment of the present application will be described in detail below from the perspective of a decompression end device with reference to FIG. 6. It should be understood that the description of the decompression end device side corresponds to the description of the compression end device side, and similar description can be made with reference to the above description and will not be repeated herein in order to avoid repetition.

FIG. 6 is a schematic flowchart of a wireless communication method 300 according to another embodiment of the present application. As shown in FIG. 6, the method 300 includes the following contents:
In S310, a decompression end device receives first configuration information sent by a first device, wherein the first configuration information is used for configuring a header compression parameter of an Ethernet frame header.
In S320, the decompression end device decompresses an Ethernet frame header of a received data packet according to the first configuration information.

Optionally, in some embodiments, the header compression parameter includes at least one of:
a header compression ID of the Ethernet frame header, a virtual local area network (VLAN) field indication, information of sub-headers to be compressed, field type information for header compression, the maximum number of context IDs, a header compression mode and a feedback mode;
wherein the header compression ID is used for indicating whether to compress the Ethernet frame header, the field type information for header compression is used for indicating a type of sub-headers to be compressed, the maximum number of context IDs is used for indicating the maximum number of sub-object channels to which a data packet corresponding to a header compression object can be mapped, the header compression mode is used for indicating whether to perform a transition of a compression state according to the feedback mode, the feedback mode is used for indicating a feedback mode used by the decompression end device, the VLAN field indication is used for indicating whether to performed header compression on a VLAN field or whether the Ethernet frame header contains a VLAN field, and the header compression object is used for indicating a unit on which the header compression is performed.

In an embodiment of the present application, after receiving a compressed data packet sent by a compression end device, the decompression end device may map the data packet to a sub-object channel corresponding to a corresponding context ID according to the first configuration information and information included in the data packet, and further recover the compressed data packet according to context content in the sub-object channel.

Further, the decompression end device may submit the decompressed data packet upwards, so that a higher layer of the decompression end device may further process the decompressed data packet.

Optionally, in some embodiments, the field type information for header compression includes at least one of: a static class, a static-known class, a static-def class, an inferred class, a changing class, and an unchanging class.

Optionally, in some embodiments, the information of the sub-headers to be compressed includes at least one of:
a destination address, a source address, an Ethernet type, an Ethernet length, a tag protocol ID (TP-ID), a precedence code point (PCP), a drop eligible indicator (DEI), and a VLAN ID.

Optionally, in some embodiments, the feedback mode includes at least one of: a mode in which a feedback data packet needs to be sent as a reply, a mode in which a feedback data packet does not need to be sent as a reply and a mode in which a feedback data packet needs to be sent as a reply under a specific condition.

Optionally, in some embodiments, the first configuration information is also used for configuring header compression object information corresponding to the header compression parameter.

Optionally, in some embodiments, the header compression object information includes at least one of:
at least one Quality of Service (QoS) flow ID, at least one bearer ID, at least one terminal device ID and at least one protocol data unit (PDU) session ID.

Optionally, in some embodiments, the header compression parameter is configured based on at least one of:
at least one QoS flow, at least one bearer, a terminal device and at least one PDU session.

Optionally, in some embodiments, the first configuration information is also used for indicating a mapping mode between context IDs and Ethernet frame headers including a VLAN field.

Optionally, in some embodiments, the first configuration information is specifically used for configuring that:
an Ethernet frame header including one VLAN field is mapped to a sub-object channel corresponding to a first context ID;
an Ethernet frame header including two VLAN field is mapped to a sub-object channel corresponding to a second context ID; and
an Ethernet frame header excluding a VLAN field is mapped to a sub-object channel corresponding to a third context ID.

Optionally, in some embodiments, the first configuration information is also used for indicating respective mapping modes between context IDs and Ethernet frame headers including a VLAN field as well as Ethernet frame headers excluding a VLAN field.

Optionally, in some embodiments, the first configuration information is specifically used for configuring that:
an Ethernet frame header including a VLAN field is mapped to a sub-object channel corresponding to a first context ID; and
an Ethernet frame header excluding a VLAN field is mapped to a sub-object channel corresponding to a third context ID.

In an embodiment of the present application, the decompression end device may also control activation (or turn-on) or deactivation (or turn-off) of a decompression function of the Ethernet frame header. Further, the Ethernet frame header of the received data packet is decompressed according to the first configuration information when the decompression function of the Ethernet frame header is in an activated state, and the Ethernet frame header of the data packet is not decompressed when the decompression function of the Ethernet frame header is in a deactivated state.

An activation mode of the decompression function of the Ethernet frame header will be described below in combination with specific embodiments.
Embodiment 1: the decompression end device activates the decompression function of the Ethernet frame header in a case that the first configuration information is received. For example, the decompression end device may activate the decompression function of the Ethernet frame header when receiving an RRC message of a first device, wherein the RRC message includes the first configuration information.
Embodiment 2: the decompression end device activates the decompression function of the Ethernet frame header in the case that a dedicated activation signaling may be received. For example, the decompression end device activates the decompression function of the Ethernet frame header in a case that a second activation signaling, is received, which is used for instructing the decompression end device to activate the decompression function of the Ethernet frame header.
   Optionally, in some embodiments, the decompression end device may be a terminal device, and the second activation signaling may be sent by the first device. In this case, the second activation signaling may be an RRC message, an MAC CE or DCI, or other downlink messages or downlink information.
Embodiment 3: The decompression end device activates the decompression function of the Ethernet frame header according to a preset rule.

Optionally, the preset rule may be agreed by a protocol, or may be agreed between the compression end device and the decompression end device, or may be preconfigured by a network device, which is not limited in embodiments of the present application.

For example, the preset rule may indicate that the decompression function of the Ethernet frame header is activated by default.

For another example, the preset rule may indicate that a decompression function of an Ethernet frame header of a specific terminal device is activated by default, wherein the specific terminal device may be a terminal device supporting or only supporting transmission of data packets of Ethernet frame type.

As a further example, in some cases, the network device may configure a bearer to perform header compression using a RoHC mode. In this case, the preset rule indicates that a decompression function of an Ethernet frame header of a bearer with the RoHC mode unconfigured is activated by default, so that data packets of such bearer may be decompressed according to the decompression function of the Ethernet frame header.

It can be known from the foregoing description that the decompression end device may feed back a decompression result of the data packet, that is, send a state report to the compression end device, wherein the state report may include the decompression result of the received data packet by the decompression end device. For example, the decompression result may indicate whether decompression is successful or continuous decompression is successful or partial decompression is successful or continuous partial decompression is successful. For example, a feedback of NACK is used for indicating a failure of complete decompression or a failure of partial decompression, or a feedback of ACK is used for indicating a success of the decompression. Optionally, the decompression result may also include a decompression result of a data packet corresponding to an SN. Optionally, the decompression result may also include at least one of: an SN of a data packet corresponding to at least one ACK, an SN of a data packet corresponding to at least one ACK, a sequence number corresponding to the first data packet which is decompressed unsuccessfully, a sequence number corresponding to the last data packet which is decompressed successfully, a sequence number +1 corresponding to the last data packet which is decompressed successfully, etc.

An activation mode in which the state report is sent by the decompression end device will be described below with reference to specific embodiments.
Mode 1: a function of sending the state report by the decompression end device is activated or turned on by default. In this case, the compression end device may send the state report to the compression end device after the data packet is decompressed to report the decompression result of the data packet.
Mode 2: the decompression end device may also activate the function in a case that a dedicated activation signaling is received.
   For example, the decompression end device activates the function of sending the state report in a case that a third activation signaling is received wherein the third activation signaling is used for instructing the decompression end device to activate the function of sending the state report.
   Optionally, in some embodiments, the decompression end device may be a terminal device, and the third activation signaling may be sent by the first device. In this case, the third activation signaling may be an RRC message, an MAC CE or DCI, or other downlink messages or downlink information.
Mode 3: the decompression end device may determine whether to activate the function of sending the state report according to a feedback mode configured by the first configuration information or a predefined feedback mode.

For example, if the feedback mode configured by the first configuration information is a mode in which a feedback data packet needs to be sent as a reply, the decompression end device may determine that the function of sending the state report is activated by default; or if the feedback mode is a mode in which a feedback data packet does not need to be sent as a reply, the decompression end device may determine that the function of sending the state report is deactivated by default; or if the feedback mode is a mode in which a feedback data packet needs to be sent as a reply under a specific condition, the decompression end device may determine that the function of sending the state report is activated under the specific condition, i.e., the decompression end device can send the state report under the specific condition.

Optionally, in some embodiments, the specific condition may include at least one of:
Condition 1: periodic sending, that is, sending according to a certain period. For example, decompression results of compressed data packets received in this period may be fed back in combination, so as to reduce signaling overhead. Optionally, the decompression result may correspond to a data packet with a specific SN, that is, the decompression result is a decompression result of the data packet with the SN.
Condition 2: the state report is sent when the data packet is decompressed erroneously.
   The state report may include the decompression result (which may include at least one of: indication of sending errors, specific error information and information of successful sending) of the data packet decompressed erroneously, so that when the compression end device receives the state report, retransmission of the data packet decompressed erroneously may performed, for example, transition of a compression state is performed, i.e., the compression state is switched from a fully compressed state to a partially compressed state, so the compression of data packet is performed in a more reliable compression state, which is conducive to ensuring reliable transmission of the data packet which is decompressed erroneously.
Condition 3: the state report is sent when the data packet is decompressed erroneously multiple times in a row.
   The state report may include the decompression result (which may include at least one of: indication of sending errors, specific error information and information of successful sending) of the data packet decompressed erroneously, so that when the decompression end device receives the state report, retransmission of the data packet decompressed erroneously may performed, for example, transition of a compression state is performed, i.e., the compression state is switched from a fully compressed state to a partially compressed state, so the compression of data packet is in a more reliable compression state, which is conducive to ensuring reliable transmission of the data packet which is decompressed erroneously.
Condition 4: when a compression state of the compression end device is changed, that is, the state report is sent when the compression state is switched from one compression state to another compression state. For example, when the compression state is switched from an uncompressed state to a compressed state, or switched from a compressed state to an uncompressed state, the change in the compression state of the compression end device shows that decompression of the data packet may have failed, in this case, the state report is sent, which is conducive to ensuring reliable transmission of the data packet.
Condition 5: when an uncompressed data packet is received, that is, the decompression end device identifies that the data packet sent by the compression end device is not compressed.
   In this case, the state report sent by the decompression end device may indicate that the data packet is unknot compressed, so that the compression end device may send the data packet in the partially compressed state or the fully compressed state, thereby reducing resource overhead of the air interface and improving the resource utilization rate.
Condition 6: when uncompressed data packets are received multiple times in a row.
   In this case, the state report sent by the decompression end device may indicate that the multiple data packets are not compressed, so that the compression end device may send the data packets in the partially compressed state or the fully compressed state, thereby reducing resource overhead of the air interface and improving the resource utilization rate.
Condition 7: a first instruction sent by the compression end device is received, wherein the first instruction is used for instructing the decompression end device to reply a feedback data packet. That is, the decompression end device may send the state report according to the instruction of the compression end device. For example, for data packets with a high reliability requirement, the compression end device may instruct the decompression end device to feed back the state report so as to facilitate retransmission of the data packets, for example, retransmission of the data packets in a more reliable compression state;
Condition 8: when a decompression state of the decompression end device is changed.
   The decompression end device needs to know information of contexts when decompressing the data packets. According acquisition situation of the contexts by the decompression end device, the decompression state includes at least one of: a state in which not all of contexts are known, which may be understood as a state in which no compression is needed or a state in which the compression cannot be performed;
   a state in which part of the contexts can be known, which can be understood as a partially decompressed state; and
   a state in which all of the contexts can be known, which can be understood as a fully decompressed state.
   When the decompression state of the decompression end device is changed, for example, if the decompression state is switched from a fully decompressed state to a partially decompressed state, in this case, the decompression end device may send the state report to the compression end device to inform the compression end device of the decompression result, so that the compression end device may perform retransmission of the data packet, for example, retransmission of the data packet in a more reliable compression state, thereby improving the reliability of transmission of the data packet.
Condition 9: feedback when a specific data packet is received.
   For example, the decompression end device may send the state report to the compression end device when receiving data packets with a high reliability requirement, such as data packets of URLLC. For another example, the decompression end device may send the state report to the compression end device when receiving specific data packets, such as data packets in specific compressed states (e.g., uncompressed data packets or fully compressed data packets, etc.), data packets with specific indications, the first data packet with changed compression efficiency, and K data packets with changed compression efficiency, where K is a positive integer, so that the compression end device can determine whether to retransmit the data packets according to the state report. When the decompression of the data packets fails partially or completely, retransmission of the data packets is performed, for example, the retransmission of the data packet may be performed in a more reliable compression state, thereby improving the reliability of transmission of the data packets.
Condition 10: when a compressed data packet with compression efficiency lower than the current compression efficiency is received.
Condition 11: when compressed data packets with compression efficiency lower than the current compression efficiency are received multiple times in a row.

Optionally, in some embodiments, the decompression end device may also control deactivation of the decompression function of the Ethernet frame header. Optionally, the decompression end device may also deactivate the function in a case that a dedicated deactivation signaling is received.

For example, the decompression end device deactivates the decompression function of the Ethernet frame header in the case that a second deactivation signaling is received, wherein the second deactivation signaling is used for instructing the decompression end device to deactivate the decompression function of the Ethernet frame header.

Optionally, in some embodiments, the decompression end device may be a terminal device, and the second deactivation signaling may be sent by the first device. In this case, the second deactivation signaling may be an RRC message, an MAC CE or DCI, or other downlink messages or downlink information.

Therefore, according to the wireless communication method according to the embodiment of the present application, the decompression end device may not only decompress the compressed data packet, but also send the state report under specific conditions, which is conducive to provide a more reliable header compression solution.

The wireless transmission methods according to the embodiments of the present application are described in detail above from the perspectives of the compression end device and the decompression end device with reference to FIGS. 5 to 6. A wireless communication method according to still another embodiment of the present application will be described in detail below from the perspective of a control device with reference to FIG. 7. It should be understood that the description of the control device side corresponds to the descriptions of the compression end device side and the decompression end device side, and similar description may be made with reference to the above description, which will not be repeated here in order to avoid repetition.

FIG. 7 is a schematic flow chart of a wireless communication method 30 according to still another embodiment of the present application. As shown in FIG. 7, the method 30 includes the following contents:
In S31, a first device sends first configuration information to a compression end device and/or a decompression end device, wherein the first configuration information is used for configuring a header compression parameter of an Ethernet frame header.

Optionally, in some embodiments, the header compression parameter includes at least one of:
a header compression ID of the Ethernet frame header, a virtual local area network (VLAN) field indication, information of sub-headers to be compressed, field type information for header compression, the maximum number of context IDs, a header compression mode and a feedback mode;
wherein the header compression ID is used for indicating whether to compress the Ethernet frame header, the field type information for header compression is used for indicating a type of sub-headers to be compressed, the maximum number of context IDs is used for indicating the maximum number of sub-object channels to which a data packet corresponding to a header compression object can be mapped, the header compression mode is used for indicating whether to perform transition of a compression state according to the feedback mode, the feedback mode is used for indicating a feedback mode used by the decompression end device, the VLAN field indication is used for indicating whether to perform header compression on a VLAN field or whether the Ethernet frame header contains a VLAN field, and the header compression object is used for indicating a unit on which header compression is performed.

Optionally, in some embodiments, the field type information for header compression includes at least one of: a static class, a static-known class, a static-def class, an inferred class, a changing class, and an unchanging class.

Optionally, in some embodiments, the information of the sub-headers to be compressed includes at least one of:
a destination address, a source address, an Ethernet type, an Ethernet length, a tag protocol ID (TP-ID), a precedence code point (PCP), a drop eligible indicator (DEI), and a VLAN ID.

Optionally, in some embodiments, the feedback mode includes at least one of: a mode in which a feedback data packet needs to be sent as a reply, a mode in which a feedback data packet does not need to be sent as a reply and a mode in which a feedback data packet needs to be sent as a reply under a specific condition.

Optionally, in some embodiments, the compression state includes at least one of: an uncompressed state, a partially compressed state and a fully compressed state.

Optionally, in some embodiments, the first configuration information is also used for configuring header compression object information corresponding to the header compression parameter.

Optionally, in some embodiments, the header compression object information includes at least one of:
at least one Quality of Service (QoS) flow ID, at least one bearer ID, at least one terminal device ID and at least one protocol data unit (PDU) session ID.

Optionally, in some embodiments, the header compression parameter is configured based on at least one of:
at least one QoS flow, at least one bearer, a terminal device and at least one PDU session.

Optionally, in some embodiments, the first configuration information is also used for indicating a mapping mode between context IDs and Ethernet frame headers including VLAN fields.

Optionally, in some embodiments, the first configuration information is specifically used for configuring that:
an Ethernet frame header including one VLAN field is mapped to a sub-object channel corresponding to a first context ID;
an Ethernet frame header including two VLAN field is mapped to a sub-object channel corresponding to a second context ID; and
an Ethernet frame header excluding a VLAN field is mapped to a sub-object channel corresponding to a third context ID.

Optionally, in some embodiments, the first configuration information is also used for indicating respective mapping modes between context IDs and Ethernet frame headers including VLAN fields as well as Ethernet frame headers excluding a VLAN field, .

Optionally, in some embodiments, the first configuration information is specifically used for configuring that:
an Ethernet frame header including a VLAN field is mapped to a sub-object channel corresponding to a first context ID; and
an Ethernet frame header excluding a VLAN field is mapped to a sub-object channel corresponding to a third context ID.

Optionally, in some embodiments, the compression end device is a terminal device, the decompression end device is a terminal device, and the first device is an access network device, a core network device or an application layer device.

Optionally, in some embodiments, the compression end device is a terminal device, the decompression end device is an access network device, and the first device is an access network device, a core network device or an application layer device.

Optionally, in some embodiments, the compression end device is an access network device, the decompression end device is a terminal device, and the first device is an access network device, a core network device or an application layer device.

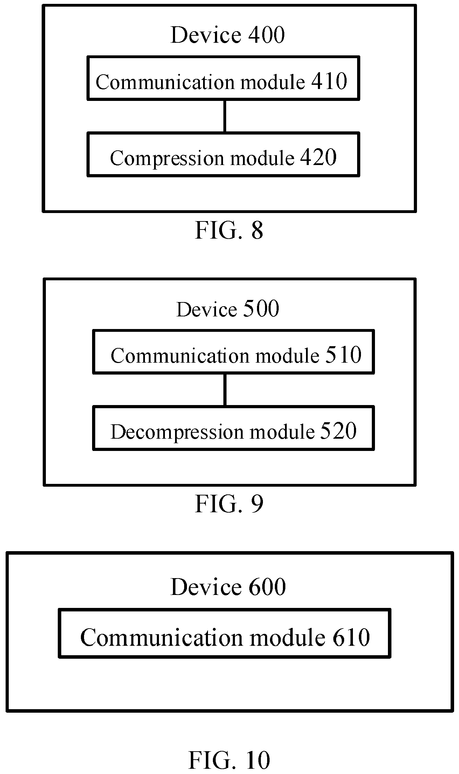

Method embodiments of the present application are described in detail above from the perspectives of the compression end device and the decompression end device with reference to FIGS. 5 to 7, and device embodiments of the present application will be described in detail below with reference to FIGS. 8 to 13. It should be understood that the device embodiments are corresponding to the method embodiments, and similar description of the device embodiments may be made with reference to the method embodiments.

FIG. 8 shows a schematic block diagram of a wireless communication device 400 according to an embodiment of the present application. As shown in FIG. 8, the device 400 includes a communication module 410 configured to receive first configuration information, wherein the first configuration information is used for configuring a header compression parameter of an Ethernet frame header; and
a compression module 420 configured to compress the Ethernet frame header of a data packet according to the first configuration information.

Optionally, in some embodiments, the header compression parameter includes at least one of:
a header compression ID of the Ethernet frame header, a virtual local area network (VLAN) field indication, information of sub-headers to be compressed, field type information for header compression, the maximum number of context IDs, a header compression mode and a feedback mode;
wherein the header compression ID is used for indicating whether to compress the Ethernet frame header, the field type information for header compression is used for indicating a type of sub-headers to be compressed, the maximum number of context IDs is used for indicating the maximum number of sub-object channels to which a data packet corresponding to a header compression object can be mapped, the header compression mode is used for indicating whether the device performs transition of a compression state according to the feedback mode, the feedback mode is used for indicating a feedback mode used by the decompression end device, the VLAN field indication is used for indicating whether to perform header compression on a VLAN field or whether the Ethernet frame header contains a VLAN field, and the header compression object is used for indicating a unit on which header compression is performed.

Optionally, in some embodiments, the field type information for header compression includes at least one of:
a static class, a static-known class, a static-def class, an inferred class, a changing class, and an unchanging class. Optionally, in some embodiments, the information of the sub-headers to be compressed includes at least one of:
a destination address, a source address, an Ethernet type, an Ethernet length, a tag protocol ID (TP-ID), a precedence code point (PCP), a drop eligible indicator (DEI), and a VLAN ID.

Optionally, in some embodiments, the feedback mode includes at least one of:
a mode in which a feedback data packet needs to be sent as a reply, a mode in which a feedback data packet does not need to be sent as a reply and a mode in which a feedback data packet needs to be sent as a reply under a specific condition.

Optionally, in some embodiments, the compression state includes at least one of:
an uncompressed state, a partially compressed state and a fully compressed state.

Optionally, in some embodiments, the first configuration information is also used for configuring header compression object information corresponding to the header compression parameter.

Optionally, in some embodiments, the header compression object information includes at least one of:
at least one Quality of Service (QoS) flow ID, at least one bearer ID, at least one terminal device ID and at least one protocol data unit (PDU) session ID.

Optionally, in some embodiments, the header compression parameter is configured based on at least one of:
at least one QoS flow, at least one bearer, a terminal device and at least one PDU session.

Optionally, in some embodiments, the compression module 420 is specifically configured to:
map the data packet corresponding to the header compression object into sub-object channels corresponding to the same or different context IDs.

Optionally, in some embodiments, the first configuration information is also used for indicating a mapping mode between context IDs and Ethernet frame headers including VLAN fields.

Optionally, in some embodiments, the first configuration information is specifically used for configuring that:
an Ethernet frame header including one VLAN field is mapped to a sub-object channel corresponding to a first context ID;
an Ethernet frame header including two VLAN fields is mapped to a sub-object channel corresponding to a second context ID; and
an Ethernet frame header excluding a VLAN field is mapped to a sub-object channel corresponding to a third context ID.

Optionally, in some embodiments, the first configuration information is also used for indicating mapping modes between respectively context IDs and Ethernet frame headers including VLAN fields as well as Ethernet frame headers excluding a VLAN field.

Optionally, in some embodiments, the first configuration information is specifically used for configuring that:
an Ethernet frame header including a VLAN field is mapped to a sub-object channel corresponding to a first context ID; and
an Ethernet frame header excluding a VLAN field is mapped to a sub-object channel corresponding to a third context ID.

Optionally, in some embodiments, the device further includes:
a control module configured to activate a header compression function of the Ethernet frame header.

Optionally, in some embodiments, the control module is specifically configured to:
activate the header compression function of the Ethernet frame header in a case that the first configuration information is received.

Optionally, in some embodiments, the control module is specifically configured to activate the header compression function of the Ethernet frame header in a case that a first activation signaling is received, wherein the first activation signaling is used for instructing the device to activate the header compression function of the Ethernet frame header.

Optionally, in some embodiments, the first activation signaling is at least one of:
a radio resource control (RRC) message, a media access control (MAC) control element (CE) and downlink control information (DCI).

Optionally, the control module is specifically configured to activate the header compression function of the Ethernet frame header according to a preset rule.

Optionally, in some embodiments, the preset rule indicates that the header compression function of the Ethernet frame header is activated by default; or the preset rule indicates that a header compression function of an Ethernet frame header of a specific terminal device is activated by default; or the preset rule indicates that a header compression function of an Ethernet frame header of a bearer with a robust header compression (RoHC) mode unconfigured is activated by default.

Optionally, in some embodiments, the communication module 410 is specifically configured to:
receive a radio resource control (RRC) message sent by a first device, wherein the RRC message includes the first configuration information.

Optionally, the device is a terminal device, and the first device is an access network device, a core network device or an application layer device.

It should be understood that the device 400 according to the embodiment of the present application may correspond to the compression end device in the method embodiments of the present application, and the above-mentioned and other operations and/or functions of various units in the device 400 are respectively for implementing the corresponding processes of the compression end device in the method 200 shown in FIG. 5, which will not be repeated here for sake of brevity.

FIG. 9 is a schematic block diagram of a wireless communication device according to an embodiment of the present application. The device 500 of FIG. 9 includes:
a communication module 510 configured to receive first configuration information sent by a first device, wherein the first configuration information is used for configuring a header compression parameter of an Ethernet frame header; and
a decompression module 520 configured to decompress the Ethernet frame header of a received data packet according to the first configuration information.

Optionally, in some embodiments, the header compression parameters include at least one of:
a header compression ID of the Ethernet frame header, a virtual local area network (VLAN) field indication, information of sub-headers to be compressed, field type information for header compression, the maximum number of context IDs, a header compression mode and a feedback mode;
wherein the header compression ID is used for indicating whether the Ethernet frame header is compressed, the field type information for header compression is used for indicating a type of sub-headers to be compressed, the maximum number of context IDs is used for indicating the maximum number of sub-object channels to which a data packet corresponding to a header compression object can be mapped, the header compression mode is used for indicating whether the decompression end device performs transition of a compression state according to the feedback mode, the feedback mode is used for indicating a feedback mode used by the device, the VLAN field indication is used for indicating whether to perform header compression on a VLAN field or whether the Ethernet frame header contains a VLAN field, and the header compression object is used for indicating a unit on which header compression is performed.

Optionally, in some embodiments, the field type information for header compression includes at least one of: a static class, a static-known class, a static-def class, an inferred class, a changing class, and an unchanging class.

Optionally, in some embodiments, the information of the sub-headers to be compressed includes at least one of:
a destination address, a source address, an Ethernet type, an Ethernet length, a tag protocol ID (TP-ID), a precedence code point (PCP), a drop eligible indicator (DEI), and a VLAN ID.

Optionally, in some embodiments, the feedback mode includes at least one of:
a mode in which a feedback data packet needs to be sent as a reply, a mode in which a feedback data packet does not need to be sent as a reply and a mode in which a feedback data packet needs to be sent as a reply under a specific condition.

Optionally, in some embodiments, the first configuration information is also used for configuring header compression object information corresponding to the header compression parameter.

Optionally, in some embodiments, the header compression object information includes at least one of:
at least one Quality of Service (QoS) flow ID, at least one bearer ID, at least one terminal device ID and at least one protocol data unit (PDU) session ID.

Optionally, in some embodiments, the header compression parameter is configured based on at least one of:
at least one QoS flow, at least one bearer, a terminal device and at least one PDU session.

Optionally, in some embodiments, the first configuration information is also used for indicating a mapping mode between context IDs and Ethernet frame headers including VLAN fields.

Optionally, in some embodiments, the first configuration information is specifically used for configuring that:
an Ethernet frame header including one VLAN field is mapped to a sub-object channel corresponding to a first context ID;
an Ethernet frame header including two VLAN fields is mapped to a sub-object channel corresponding to a second context ID; and
an Ethernet frame header excluding a VLAN field is mapped to a sub-object channel corresponding to a third context ID.

Optionally, in some embodiments, the first configuration information is also used for indicating respectively mapping modes between context IDs and Ethernet frame headers including VLAN fields as well as Ethernet frame headers excluding a VLAN field.

Optionally, in some embodiments, the first configuration information is specifically used for configuring that:
an Ethernet frame header including a VLAN field is mapped to a sub-object channel corresponding to a first context ID; and
that an Ethernet frame header excluding a VLAN field is mapped to a sub-object channel corresponding to a third context ID.

Optionally, in some embodiments, the device further includes:
a control module configured to activate a decompression function of the Ethernet frame header.

Optionally, in some embodiments, the control module is specifically configured to activate the decompression function of the Ethernet frame header in the case that the first configuration information is received.

Optionally, in some embodiments, the control module is specifically configured to activate the decompression function of the Ethernet frame header in the case that a second activation signaling is received, wherein the second activation signaling is used for instructing the device to activate the decompression function of the Ethernet frame header.

Optionally, in some embodiments, the second activation signaling is at least one of:
a radio resource control (RRC) message, a media access control (MAC) control element (CE) and downlink control information (DCI).

Optionally, in some embodiments, the control module is specifically configured to:
activate the decompression function of the Ethernet frame header according to a preset rule.

Optionally, in some embodiments, the preset rule indicates that the decompression function of the Ethernet frame header is activated by default; or the preset rule indicates that a decompression function of an Ethernet frame header of a specific terminal device is activated by default; or the preset rule indicates that a decompression function of an Ethernet frame header of a bearer with a robust header compression (RoHC) mode unconfigured is activated by default.

Optionally, in some embodiments, the communication module 510 is further configured to:
send a state report to a compression end device, wherein the state report is used for indicating a decompression result of the data packet by the device.

Optionally, in some embodiments, the communication module 510 is specifically configured to send the state report to the compression end device under a specific condition.

Optionally, in some embodiments, the specific condition is one of:
periodic sending;
erroneous decompression of the data packet;
erroneous decompression of the data packet K times in a row, with K being greater than 1; a change in a compression state of the compression end device;
receiving of an uncompressed data packet;
times of receiving uncompressed data packets being greater than X, wherein X >- 1;
receiving of a first instruction sent by the compression end device, wherein the first instruction is used for instructing the device to send the state report;
a change in a compression state of the device; and
receiving of a specific data packet.

Optionally, in some embodiments, the compression state includes at least one of:
an uncompressed state, a partially compressed state and a fully compressed state.

Optionally, in some embodiments, the decompression state includes at least one of:
a state in which not all of contexts are known or a state in which no decompression is needed;
a state in which part of the contexts can be known or a partially decompressed state; and
a state in which all of the contexts can be known or a fully decompressed state.

Optionally, in some embodiments, the communication module 510 is specifically configured to:
receive a radio resource control (RRC) message sent by the first device, wherein the RRC message includes the first configuration information.

Optionally, in some embodiments, the device is a terminal device, and the first device is an access network device, a core network device or an application layer device.

It should be understood that the device 500 according to the embodiment of the present application may correspond to the decompression end device in the method embodiments of the present application, and the above-mentioned and other operations and/or functions of various units in the device 500 are respectively for implementing the corresponding processes of the decompression end device in the method 300 shown in FIG. 6, which will not be repeated here for sake of brevity.

FIG. 10 is a schematic block diagram of a wireless communication device according to an embodiment of the present application. The device 600 of FIG. 10 includes:
a communication module 610 configured to send first configuration information to a compression end device and/or a decompression end device, the first configuration information being used for configuring a header compression parameter of an Ethernet frame header.

Optionally, in some embodiments, the header compression parameter includes at least one of:
a header compression ID of the Ethernet frame header, a virtual local area network (VLAN) field indication, information of sub-headers to be compressed, field type information for header compression, the maximum number of context IDs, a header compression mode and a feedback mode.

The header compression ID is used for indicating whether the Ethernet frame header is compressed, the field type information for header compression is used for indicating a type of sub-headers to be compressed, the maximum number of context IDs is used for indicating the maximum number of sub-object channels to which a data packet corresponding to a header compression object can be mapped, the header compression mode is used for indicating whether transition of a compression state is performed according to the feedback mode, the feedback mode is used for indicating a feedback mode used by the decompression end device, the VLAN field indication is used for indicating whether header compression is performed on a VLAN field or whether the Ethernet frame header contains the VLAN field, and the header compression object is used for indicating a unit in which header compression is performed.

Optionally, in some embodiments, the field type information for header compression includes at least one of: a static class, a static-known class, a static-def class, an inferred class, a changing class, and an unchanging class.

Optionally, in some embodiments, the information of the sub-headers to be compressed includes at least one of:
a destination address, a source address, an Ethernet type, an Ethernet length, a tag protocol ID (TP-ID), a precedence code point (PCP), a drop eligible indicator (DEI), and a VLAN ID.

Optionally, in some embodiments, the feedback mode includes at least one of:
a mode in which a feedback data packet needs to be sent as a reply, a mode in which a feedback data packet does not need to be sent as a reply and a mode in which a feedback data packet needs to be sent as a reply under a specific condition.

Optionally, in some embodiments, the compression state includes at least one of:
an uncompressed state, a partially compressed state and a fully compressed state.

Optionally, in some embodiments, the first configuration information is also used for configuring header compression object information corresponding to the header compression parameter.

Optionally, in some embodiments, the header compression object information includes at least one of:
at least one Quality of Service (QoS) flow ID, at least one bearer ID, at least one terminal device ID and at least one protocol data unit (PDU) session ID.

Optionally, in some embodiments, the header compression parameter is configured based on at least one of:
at least one QoS flow, at least one bearer, a terminal device and at least one PDU session.

Optionally, in some embodiments, the first configuration information is also used for indicating a mapping mode between Ethernet frame headers including a VLAN field and context IDs.

Optionally, in some embodiments, the first configuration information is specifically used for configuring:
that an Ethernet frame header including a VLAN field is mapped to a sub-object channel corresponding to a first context ID;
that an Ethernet frame header including two VLAN field is mapped to a sub-object channel corresponding to a second context ID; and
that an Ethernet frame header excluding a VLAN field is mapped to a sub-object channel corresponding to a third context ID.

Optionally, in some embodiments, the first configuration information is also used for indicating mapping modes between Ethernet frame headers including a VLAN field and Ethernet frame headers excluding a VLAN field, respectively, and context IDs.

Optionally, in some embodiments, the first configuration information is specifically used for configuring:
that an Ethernet frame header including a VLAN field is mapped to a sub-object channel corresponding to a first context ID; and
that an Ethernet frame header excluding a VLAN field is mapped to a sub-object channel corresponding to a third context ID.

Optionally, in some embodiments, the compression end device is a terminal device, the decompression end device is a terminal device, and the first device is an access network device, a core network device or an application layer device.

Optionally, in some embodiments, the compression end device is a terminal device, the decompression end device is an access network device, and the first device is an access network device, a core network device or an application layer device.

Optionally, in some embodiments, the compression end device is an access network device, the decompression end device is a terminal device, and the first device is an access network device, a core network device or an application layer device.

It should be understood that the device 600 according to the embodiment of the present application may correspond to the first device in the method embodiment of the present application, and the above-mentioned and other operations and/or functions of various units in the device 600 are respectively for implementing the corresponding processes of the compression end device in the method 30 shown in FIG. 7, and will not be repeated herein for sake of brevity.

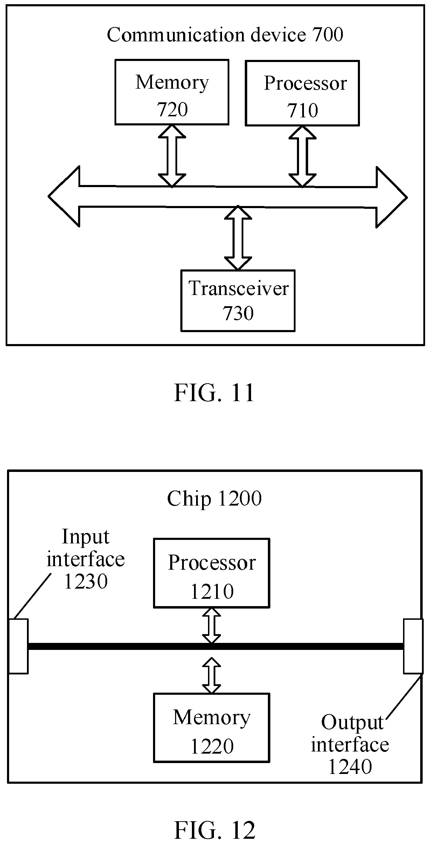

FIG. 11 is a schematic diagram of a structure of a communication device 700 according to an embodiment of the present application. The communication device 700 shown in FIG. 11 includes a processor 710, wherein the processor 710 may call and run a computer program from a memory to implement the methods in

Optionally, as shown in FIG. 11, the communication device 700 may further include a memory 720, wherein the processor 710 may call and run the computer program from the memory 720 to implement the methods in the embodiments of the present application.

In the above, the memory 720 may be a separate device independent of the processor 710 or may be integrated in the processor 710.

Optionally, as shown in FIG. 7, the communication device 700 may further include a transceiver 730, wherein the processor 710 may control the transceiver 730 to communicate with other devices. Specifically, the transceiver 730 may send information or data to other devices or receive information or data sent by other devices.

In the above, the transceiver 730 may include a transmitter and a receiver. The transceiver 730 may further include antennas, and the number of the antennas may be one or more.

Optionally, the communication device 700 may specifically be the compression end device according to the embodiments of the present application, and the communication device 700 may implement the corresponding processes implemented by the compression end device in various methods according to the embodiments of the present application, which will not be repeated here for brevity.

Optionally, the communication device 700 may specifically be the decompression end device according to the embodiments of the present application, and the communication device 700 may implement the corresponding processes implemented by the decompression end device in various methods according to the embodiments of the present application, which will not be repeated here for brevity.

Optionally, the communication device 700 may specifically be the first device according to the embodiments of the present application, and the communication device 700 may implement the corresponding processes implemented by the first device in various methods according to the embodiments of the present application, which will not be repeated here for brevity.

FIG. 12 is a schematic diagram of a structure of a chip according to an embodiment of the present application. The chip 1200 shown in FIG. 12 includes a processor 1210, wherein the processor 1210 may call and run a computer program from a memory to implement the methods according to the embodiments of the present application.

Optionally, as shown in FIG. 12, the chip 1200 may further include a memory 1220, wherein the processor 1210 may call and run the computer program from the memory 1220 to implement the methods according to the embodiments of the present application.

In the above, the memory 1220 may be a separate device independent of the processor 1210 or may be integrated in the processor 1210.

Optionally, the chip 1200 may further include an input interface 1230, wherein the processor 1210 may control the input interface 1230 to communicate with other devices or chips. Specifically, the processor 1210 may acquire information or data sent by other devices or chips.

Optionally, the chip 1200 may further include an output interface 1240, wherein the processor 1210 may control the output interface 1240 to communicate with other devices or chips. Specifically, the processor 1210 may output information or data to other devices or chips.

Optionally, the chip may be applied to the compression end device in the embodiments of the present application, and the chip may implement the corresponding processes implemented by the compression end device in various methods according to the embodiments of the present application, which will not be repeated here for brevity.

Optionally, the chip may be applied to the decompression end device in the embodiments of the present application, and the chip may implement the corresponding processes implemented by the decompression end device in various methods according to the embodiments of the present application, which will not be repeated here for brevity.

Optionally, the chip may be applied to the first device in the embodiments of the present application, and the chip may implement the corresponding processes implemented by the first device in various methods according to the embodiments of the present application, which will not be repeated here for brevity.

It should be understood that the chip mentioned in the embodiments of the present application may also be referred to as a system-level chip, a system chip, a chip system or a system-on-chip, etc.

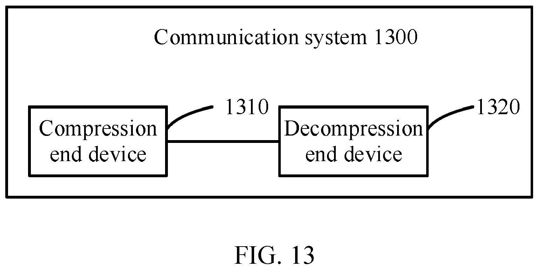

FIG. 13 is a schematic block diagram of a communication system 1300 according to an embodiment of the present application. As shown in FIG. 8, the communication system 1300 includes a compression end device 1310 and a decompression end device 1320.

Optionally, in some embodiments, the communication system may further include a control device 1330.

In the above, the compression end device 1310 may be used for implementing the corresponding functions implemented by the compression end device in the above methods, the decompression end device 1320 may be used for implementing the corresponding functions implemented by the decompression end device in the above methods, and the control device 1330 may be used for implementing the corresponding functions implemented by the first device in the above methods, which will not be described here for brevity.

It should be understood that the processor in the embodiment of the present application may be an integrated circuit chip having a signal processing capability. In an implementation process, the acts of the foregoing method embodiments may be implemented through an integrated logic circuit of hardware in the processor or instructions in a form of software. The processor described above may be a general purpose processor, a digital signal processor (DSP), an application specific integrated circuit (ASIC), a field programmable gate array (FPGA) or other programmable logic device, a discrete gate or a transistor logic device, or a discrete hardware component. Various methods, acts and logical block diagrams disclosed in the embodiments of the present application can be implemented or performed. The general purpose processor may be a microprocessor, or the processor may also be any conventional processor, or the like. The acts of the methods disclosed with reference to the embodiments of the present application may be directly embodied as being implemented by a hardware decoding processor, or may be implemented by a combined execution of hardware and software modules in the decoding processor. The software modules may be located in a storage medium which is mature in the art, such as a random access memory, a flash memory, a read-only memory, a programmable read-only memory, an electrically erasable programmable memory, or a register, etc. The storage medium is located in the memory, and the processor reads information in the memory and completes the acts of the foregoing methods in combination with its hardware.

It may be understood that the memory in the embodiments of the present application may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. Through exemplary but not restrictive description, many forms of RAMs may be available, such as a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct Rambus dynamic random access memory (DR RAM). It should be noted that the memory in the systems and methods described herein is intended to include, but not be limited to, these and any other suitable types of memories.

It should be understood that the foregoing memory is described in an exemplary but non-limiting sense. For example, the memory in the embodiments of the present application may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a direct Rambus RAM (DR RAM), or the like. That is, the memory in the embodiments of the present application is intended to include, but not be limited to, these and any other suitable types of memories.

An embodiment of the present application further provides a computer readable storage medium configured to store a computer program.

Optionally, the computer readable storage medium may be applied to the compression end device in the embodiments of the present application, and the computer program causes a computer to perform the corresponding processes implemented by the compression end device in various methods according to the embodiments of the present application, which will not be repeated here for brevity.

Optionally, the computer readable storage medium may be applied to the decompression end device in the embodiments of the present application, and the computer program causes a computer to perform the corresponding processes implemented by the decompression end device in various methods according to the embodiments of the present application, which will not be repeated here for brevity.

Optionally, the computer readable storage medium may be applied to the first device in the embodiments of the present application, and the computer program causes a computer to perform the corresponding processes implemented by the first device in various methods according to the embodiments of the present application, which will not be repeated here for brevity.

An embodiment of the present application further provides a computer program product including computer program instructions.

Optionally, the computer program product may be applied to the compression end device in the embodiments of the present application, and the computer program instructions cause a computer to perform the corresponding processes implemented by the compression end device in various methods according to the embodiments of the present application, which will not be repeated here for brevity.

Optionally, the computer program product may be applied to the decompression end device in the embodiments of the present application, and the computer program instructions cause a computer to perform the corresponding processes implemented by the decompression end device in various methods according to the embodiments of the present application, which will not be repeated for brevity.

Optionally, the computer program product may be applied to the first device in the embodiments of the present application, and the computer program instructions cause a computer to perform the corresponding processes implemented by the first device in various methods according to the embodiments of the present application, which will not be repeated here for brevity.

An embodiment of the present application further provides a computer program.

Optionally, the computer program may be applied to the compression end device in the embodiments of the present application. The computer program, when being run on a computer, causes the computer to perform the corresponding processes implemented by the compression end device in various methods according to the embodiments of the present application, which will not be repeated here for brevity.

Optionally, the computer program may be applied to the decompression end device in the embodiments of the present application. The computer program, when being run on a computer, causes the computer to perform the corresponding processes implemented by the decompression end device in various methods according to the embodiments of the present application, which will not be repeated here for brevity.

Optionally, the computer program may be applied to the first device in the embodiments of the present application. The computer program, when being run on a computer, causes the computer to perform the corresponding processes implemented by the first device in various methods according to the embodiments of the present application, which will not be repeated here for brevity.

A person of ordinary skill in the art may recognize that the elements and algorithm acts in various examples described in combination with the embodiments disclosed herein may be implemented in electronic hardware, or a combination of computer software and electronic hardware. Whether these functions are implemented in hardware or software depends on the specific application and design constraints of the technical solution. Those skilled in the art may use different methods to implement the described functions for each particular application, but such implementation should not be considered to be beyond the scope of the present application.

Those skilled in the art may clearly understand that for the sake of convenience and conciseness of description, the specific working processes of the systems, devices and units described above may be described with reference to the corresponding processes in the above method embodiments, which will not be repeated here.

In several embodiments provided by the present invention, it should be understood that the disclosed systems, devices and methods may be implemented in other ways. For example, the device embodiments described above are only illustrative, for example, the division of the units is only a logical function division, and there may be other division manners in actual implementation. For example, multiple units or components may be combined or may be integrated into another system, or some features may be ignored or not executed. In addition, the shown or discussed coupling or direct coupling or communication connection between each other may be an indirect coupling or communication connection through some interfaces, devices or units, or may be in electrical, mechanical or other forms.

The units described as separate components may or may not be physically separated, and the component shown as a unit may or may not be a physical unit, i.e., it may be located in one place or may be distributed across multiple network units. Part or all of the units may be selected according to actual needs to achieve the purpose of the solutions of the embodiments.

In addition, various functional units in various embodiments of the present application may be integrated into one processing unit, or may exist physically separately, or two or more than two units may be integrated in one unit.

The function, if implemented in a form of software functional unit and sold or used as an independent product, may be stored in a computer readable storage medium. Based on such understanding, the technical solution of the present application, in essence, or the part contributing to the prior art, or the part of the technical solution, may be embodied in the form of a software product, which is stored in a storage medium, and includes several instructions for causing a computer device (which may be a personal computer, a server, or a network device, etc.) to perform all or part of the acts of various embodiments of the present application. The aforementioned storage medium includes various media, such as a U disk, a mobile hard disk, a read-only memory (ROM), a random access memory (RAM), a magnetic disk, or an optical disk, which are capable of storing program codes.

What are described above are merely embodiments of the present application, but the protection scope of the present application is not limited thereto. Any variation or substitution that may be easily conceived by a person skilled in the art within the technical scope disclosed by the present application shall be included within the protection scope of the present application. Therefore, the protection scope of the present application shall be subject to the protection scope of the claims.

## Claims

1. A wireless communication method, comprising:
receiving, by a compression end device, first configuration information, wherein the first configuration information is used for configuring a header compression parameter of an Ethernet frame header; and
compressing, by the compression end device, an Ethernet frame header of a data packet according to the first configuration information.

2. The method of claim 1, wherein the header compression parameter comprises at least one of:
a header compression identifier (ID) of an Ethernet frame header, a virtual local area network (VLAN) field indication, information of a sub-header to be compressed, field type information for header compression, a maximum number of context IDs, a header compression mode, and a feedback mode;
wherein the header compression ID is used for indicating whether to compress the Ethernet frame header, the field type information for header compression is used for indicating a type of a sub-header to be compressed, the maximum number of context IDs is used for indicating a maximum number of sub-object channels to which a data packet corresponding to a header compression object is capable of being mapped, the header compression mode is used for indicating whether the compression end device performs transition of a compression state according to the feedback mode, the feedback mode is used for indicating a feedback mode used by a decompression end device, the VLAN field indication is used for indicating whether to perform header compression on a VLAN field or whether the Ethernet frame header contains a VLAN field, and the header compression object is used for indicating a unit by which the header compression is performed.

3. The method of claim 2, wherein the field type information for header compression comprises at least one of:
a static class, a static-known class, a static-def class, an inferred class, a changing class, and an unchanging class.

4. The method of claim 2 or 3, wherein the information of the sub-header to be compressed comprises at least one of:
a destination address, a source address, an Ethernet type, an Ethernet length, a tag protocol ID (TP-ID), a precedence code point (PCP), a drop eligible indicator (DEI), and a VLAN ID.

5. The method of any one of claims 2 to 4, wherein the feedback mode comprises at least one of:
a mode in which a feedback data packet needs to be sent as a reply, a mode in which a feedback data packet does not need to be sent as a reply, and a mode in which a feedback data packet needs to be sent as a reply under a specific condition.

6. The method of any one of claims 2 to 5, wherein the compression state comprises at least one of:
an uncompressed state, a partially compressed state, and a fully compressed state.

7. The method of any one of claims 1 to 6, wherein the first configuration information is further used for configuring header compression object information corresponding to the header compression parameter.

8. The method of claim 7, wherein the header compression object information comprises at least one of:
at least one Quality of Service (QoS) flow ID, at least one bearer ID, at least one terminal device ID, and at least one protocol data unit (PDU) session ID.

9. The method of any one of claims 1 to 8, wherein the header compression parameter is configured based on at least one of:
at least one QoS flow, at least one bearer, a terminal device, and at least one PDU session.

10. The method of any one of claims 1 to 9, wherein compressing, by the compression end device, the Ethernet frame header of the data packet according to the first configuration information comprises:
mapping, by the compression end device, a data packet corresponding to a header compression object into a sub-object channel corresponding to a same or different context ID.

11. The method of any one of claims 1 to 10, wherein the first configuration information is further used for indicating a mapping mode between a context ID and an Ethernet frame header comprising a VLAN field.

12. The method of claim 11, wherein the first configuration information is specifically used for configuring that:
an Ethernet frame header comprising one VLAN field is mapped to a sub-object channel corresponding to a first context ID;
an Ethernet frame header comprising two VLAN fields is mapped to a sub-object channel corresponding to a second context ID; and
an Ethernet frame header excluding a VLAN field is mapped to a sub-object channel corresponding to a third context ID.

13. The method of any one of claims 1 to 10, wherein the first configuration information is further used for indicating a mapping mode between a context IDs and an Ethernet frame header comprising a VLAN field and a mapping mode between a context ID and an Ethernet frame header excluding a VLAN field.

14. The method of claim 13, wherein the first configuration information is specifically used for configuring that:
an Ethernet frame header comprising a VLAN field is mapped to a sub-object channel corresponding to a first context ID; and
an Ethernet frame header excluding a VLAN field is mapped to a sub-object channel corresponding to a third context ID.

15. The method of any one of claims 1 to 14, further comprising:
activating, by the compression end device, a header compression function of the Ethernet frame header.

16. The method of claim 15, wherein activating, by the compression end device, the header compression function of the Ethernet frame header comprises:
activating, by the compression end device, the header compression function of the Ethernet frame header in a case that the compression end device receives the first configuration information.

17. The method of claim 15, wherein activating, by the compression end device, the header compression function of the Ethernet frame header comprises:
activating, by the compression end device, the header compression function of the Ethernet frame header in a case that the compression end device receives a first activation signaling, wherein the first activation signaling is used for instructing the device to activate the header compression function of the Ethernet frame header.

18. The method of claim 17, wherein the first activation signaling is at least one of:
a radio resource control (RRC) message, a media access control (MAC) control element (CE), and downlink control information (DCI).

19. The method of claim 18, wherein activating, by the compression end device, the header compression function of the Ethernet frame header comprises:
activating, by the compression end device, the header compression function of the Ethernet frame header according to a preset rule.

20. The method of claim 19, wherein the preset rule indicates that the header compression function of the Ethernet frame header is activated by default; or
the preset rule indicates that a header compression function of an Ethernet frame header of a specific terminal device is activated by default; or
the preset rule indicates that a header compression function of an Ethernet frame header of a bearer with a robust header compression (RoHC) mode unconfigured is activated by default.

21. The method of any one of claims 1 to 20, wherein receiving, by the compression end device, the first configuration information comprises:
receiving, by the compression end device, a radio resource control (RRC) message sent by a first device, wherein the RRC message comprises the first configuration information.

22. The method of claim 21, wherein the compression end device is a terminal device, and the first device is an access network device, a core network device, or an application layer device.

23. A wireless communication method, comprising:
receiving, by a decompression end device, first configuration information sent by a first device, wherein the first configuration information is used for configuring a header compression parameter of an Ethernet frame header; and
decompressing, by the decompression end device, an Ethernet frame header of a received data packet according to the first configuration information.

24. The method of claim 23, wherein the header compression parameter comprises at least one of:
a header compression ID of an Ethernet frame header, a virtual local area network (VLAN) field indication, information of a sub-header to be compressed, field type information for header compression, a maximum number of context IDs, a header compression mode, and a feedback mode;
wherein the header compression ID is used for indicating whether to compress the Ethernet frame header, the field type information for header compression is used for indicating a type of a sub-header to be compressed, the maximum number of context IDs is used for indicating a maximum number of sub-object channels to which a data packet corresponding to a header compression object is capable of being mapped, the header compression mode is used for indicating whether the compression end device performs transition of a compression state according to the feedback mode, the feedback mode is used for indicating a feedback mode used by the decompression end device, the VLAN field indication is used for indicating whether to perform header compression on a VLAN field or whether the Ethernet frame header contains a VLAN field, and the header compression object is used for indicating a unit by which the header compression is performed.

25. The method of claim 24, wherein the field type information for header compression comprises at least one of:
a static class, a static-known class, a static-def class, an inferred class, a changing class, and an unchanging class.

26. The method of claim 24 or 25, wherein the information of the sub-header to be compressed comprises at least one of:
a destination address, a source address, an Ethernet type, an Ethernet length, a tag protocol ID (TP-ID), a precedence code point (PCP), a drop eligible indicator (DEI), and a VLAN ID.

27. The method of any one claims 24 to 26, wherein the feedback mode comprises at least one of:
a mode in which a feedback data packet needs to be sent as a reply, a mode in which a feedback data packet does not need to be sent as a reply and a mode in which a feedback data packet needs to be sent as a reply under a specific condition.

28. The method of any one claims 23 to 27, wherein the first configuration information is further used for configuring header compression object information corresponding to the header compression parameter.

29. The method of 28, wherein the header compression object information comprises at least one of:
at least one Quality of Service (QoS) flow ID, at least one bearer ID, at least one terminal device ID, and at least one protocol data unit (PDU) session ID.

30. The method of any one claims 23 to 29, wherein the header compression parameter is configured based on at least one of:
at least one QoS flow, at least one bearer, a terminal device, and at least one PDU session.

31. The method of any one claims 23 to 30, wherein the first configuration information is further used for indicating a mapping mode between a context ID and an Ethernet frame header comprising a VLAN field.

32. The method of claim 31, wherein the first configuration information is specifically used for configuring that:
an Ethernet frame header comprising one VLAN field is mapped to a sub-object channel corresponding to a first context ID;
an Ethernet frame header comprising two VLAN fields is mapped to a sub-object channel corresponding to a second context ID; and
an Ethernet frame header excluding a VLAN field is mapped to a sub-object channel corresponding to a third context ID.

33. The method of any one claims 23 to 30, wherein the first configuration information is further used for indicating a mapping mode between a context IDs and an Ethernet frame header comprising a VLAN field and a mapping mode between a context ID and an Ethernet frame header excluding a VLAN field.

34. The method of claim 33, wherein the first configuration information is specifically used for configuring that:
an Ethernet frame header comprising a VLAN field is mapped to a sub-object channel corresponding to a first context ID; and
an Ethernet frame header excluding a VLAN field is mapped to a sub-object channel corresponding to a third context ID.

35. The method of any one claims 23 to 34, further comprising:
activating, by the decompression end device, a decompression function of the Ethernet frame header.

36. The method of claim 35, wherein activating, by the decompression end device, the decompression function of the Ethernet frame header comprises:
activating, by the decompression end device, the decompression function of the Ethernet frame header in a case that the decompression end device receives the first configuration information.

37. The method of claim 35, wherein activating, by the decompression end device, the decompression function of the Ethernet frame header comprises:
activating, by the decompression end device, the decompression function of the Ethernet frame header in a case that the decompression end device receives a second activation signaling, wherein the second activation signaling is used for instructing the decompression end device to activate the decompression function of the Ethernet frame header.

38. The method of claim 37, wherein the second activation signaling is at least one of:
a radio resource control (RRC) message, a media access control (MAC) control element (CE), and downlink control information (DCI).

39. The method of claim 35, wherein activating, by the decompression end device, the decompression function of the Ethernet frame header comprises:
activating, by the decompression end device, the decompression function of the Ethernet frame header according to a preset rule.

40. The method of claim 39, wherein the preset rule indicates that the decompression function of the Ethernet frame header is activated by default; or
the preset rule indicates that a decompression function of an Ethernet frame header of a specific terminal device is activated by default; or
the preset rule indicates that a decompression function of an Ethernet frame header of a bearer with a robust header compression (RoHC) mode unconfigured is activated by default.

41. The method of any one of claims 23 to 40, further comprising:
sending, by the decompression end device, a state report to a compression end device, wherein the state report is used for indicating a decompression result of the data packet by the decompression end device.

42. The method of claim 41, wherein sending, by the decompression end device, the state report to the compression end device comprises:
sending, by the decompression end device, the state report to the compression end device under a specific condition.

43. The method of claim 42, wherein the specific condition is one of:
periodic sending;
erroneous decompression of the data packet;
erroneous decompression of the data packet for K times in a row, wherein K is greater than 1;
a change in a compression state of the compression end device;
receiving of an uncompressed data packet;
times of receiving an uncompressed data packet being greater than X, wherein X ≥ 1;
receiving of a first instruction sent by the compression end device, wherein the first instruction is used for instructing the decompression end device to send the state report;
a change in a compression state of the decompression end device; and
receiving of a specific data packet.

44. The method of claim 43, wherein the compression state comprises at least one of:
an uncompressed state, a partially compressed state, and a fully compressed state.

45. The method of claim 43 or 44, wherein the decompression state comprises at least one of:
a state in which not all of contexts are known or a state in which no decompression is needed;
a state in which part of the contexts can be known or a partially decompressed state; and
a state in which all of the contexts can be known or a fully decompressed state.

46. The method of any one of claims 23 to 45, wherein receiving, by the decompression end device, the first configuration information comprises:
receiving, by the decompression end device, a radio resource control (RRC) message sent by the first device, wherein the RRC message comprises the first configuration information.

47. The method of claim 46, wherein the decompression end device is a terminal device, and the first device is an access network device, a core network device, or an application layer device.

48. A wireless communication method, comprising:
sending, by a first device, first configuration information to a compression end device and/or a decompression end device, wherein the first configuration information is used for configuring a header compression parameter of an Ethernet frame header.

49. The method of claim 48, wherein the header compression parameter comprises at least one of:
a header compression ID of an Ethernet frame header, a virtual local area network (VLAN) field indication, information of a sub-headers to be compressed, field type information for header compression, a maximum number of context IDs, a header compression mode, and a feedback mode;
wherein the header compression ID is used for indicating whether to compress the Ethernet frame header, the field type information for header compression is used for indicating a type of a sub-header to be compressed, the maximum number of context IDs is used for indicating a maximum number of sub-object channels to which a data packet corresponding to a header compression object is capable of being mapped, the header compression mode is used for indicating whether to perform transition of a compression state according to the feedback mode, the feedback mode is used for indicating a feedback mode used by the decompression end device, the VLAN field indication is used for indicating whether to perform header compression on a VLAN field or whether the Ethernet frame header contains a VLAN field, and the header compression object is used for indicating a unit by which the header compression is performed.

50. The method of claim 49, wherein the field type information for header compression comprises at least one of:
a static class, a static-known class, a static-def class, an inferred class, a changing class, and an unchanging class.

51. The method of claim 49 or 50, wherein the information of the sub-header to be compressed comprises at least one of:
a destination address, a source address, an Ethernet type, an Ethernet length, a tag protocol ID (TP-ID), a precedence code point (PCP), a drop eligible indicator (DEI), and a VLAN ID.

52. The method of any one of claims 49 to 51, wherein the feedback mode comprises at least one of:
a mode in which a feedback data packet needs to be sent as a reply, a mode in which a feedback data packet does not need to be sent as a reply and a mode in which a feedback data packet needs to be sent as a reply under a specific condition.

53. The method of any one of claims 49 to 52, wherein the compression state comprises at least one of:
an uncompressed state, a partially compressed state, and a fully compressed state.

54. The method of any one of claims 48 to 53, wherein the first configuration information is further used for configuring header compression object information corresponding to the header compression parameter.

55. The method of claim 54, wherein the header compression object information comprises at least one of:
at least one Quality of Service (QoS) flow ID, at least one bearer ID, at least one terminal device ID, and at least one protocol data unit (PDU) session ID.

56. The method of any one of claims 48 to 55, wherein the header compression parameter is configured based on at least one of:
at least one QoS flow, at least one bearer, a terminal device, and at least one PDU session.

57. The method of any one of claims 48 to 56, wherein the first configuration information is further used for indicating a mapping mode between a context ID and an Ethernet frame header comprising a VLAN field.

58. The method of claim 57, wherein the first configuration information is specifically used for configuring that:
an Ethernet frame header comprising one VLAN field is mapped to a sub-object channel corresponding to a first context ID;
an Ethernet frame header comprising two VLAN fields is mapped to a sub-object channel corresponding to a second context ID; and
an Ethernet frame header excluding a VLAN field is mapped to a sub-object channel corresponding to a third context ID.

59. The method of any one of claims 48 to 56, wherein the first configuration information is further used for indicating a mapping mode between a context ID and an Ethernet frame header comprising a VLAN field and a mapping mode between a context ID and an Ethernet frame header excluding a VLAN field.

60. The method of claim 59, wherein the first configuration information is specifically used for configuring that:
an Ethernet frame header comprising a VLAN field is mapped to a sub-object channel corresponding to a first context ID; and
an Ethernet frame header excluding a VLAN field is mapped to a sub-object channel corresponding to a third context ID.

61. The method of any one of claims 48 to 60, wherein the compression end device is a terminal device, the decompression end device is a terminal device, and the first device is an access network device, a core network device, or an application layer device.

62. The method of any one of claims 48 to 60, wherein the compression end device is a terminal device, the decompression end device is an access network device, and the first device is an access network device, a core network device, or an application layer device.

63. The method of any one of claims 48 to 60, wherein the compression end device is an access network device, the decompression end device is a terminal device, and the first device is an access network device, a core network device, or an application layer device.

64. A wireless communication device, comprising:
a communication module configured to receive first configuration information, wherein the first configuration information is used for configuring a header compression parameter of an Ethernet frame header; and
a compression module configured to compress an Ethernet frame header of a data packet according to the first configuration information.

65. The device of claim 64, wherein the header compression parameter comprises at least one of:
a header compression ID of an Ethernet frame header, a virtual local area network (VLAN) field indication, information of a sub-header to be compressed, field type information for header compression, a maximum number of context IDs, a header compression mode, and a feedback mode;
wherein the header compression ID is used for indicating whether to compress the Ethernet frame header, the field type information for header compression is used for indicating a type of a sub-header to be compressed, the maximum number of context IDs is used for indicating a maximum number of sub-object channels to which a data packet corresponding to a header compression object is capable of being mapped, the header compression mode is used for indicating whether the device performs transition of a compression state according to the feedback mode, the feedback mode is used for indicating a feedback mode used by a decompression end device, the VLAN field indication is used for indicating whether to perform header compression on a VLAN field or whether the Ethernet frame header contains a VLAN field, and the header compression object is used for indicating a unit by which the header compression is performed.

66. The device of claim 65, wherein the field type information for header compression comprises at least one of:
a static class, a static-known class, a static-def class, an inferred class, a changing class, and an unchanging class.

67. The device of claim 65 or 66, wherein the information of the sub-headers to be compressed comprises at least one of:
a destination address, a source address, an Ethernet type, an Ethernet length, a tag protocol ID (TP-ID), a precedence code point (PCP), a drop eligible indicator (DEI), and a VLAN ID.

68. The device of any one of claims 65 to 67, wherein the feedback mode comprises at least one of:
a mode in which a feedback data packet needs to be sent as a reply, a mode in which a feedback data packet does not need to be sent as a reply and a mode in which a feedback data packet needs to be sent as a reply under a specific condition.

69. The device of any one of claims 65 to 68, wherein the compression state comprises at least one of:
an uncompressed state, a partially compressed state, and a fully compressed state.

70. The device of any one of claims 64 to 69, wherein the first configuration information is further used for configuring header compression object information corresponding to the header compression parameter.

71. The device of claim 70, wherein the header compression object information comprises at least one of:
at least one Quality of Service (QoS) flow ID, at least one bearer ID, at least one terminal device ID, and at least one protocol data unit (PDU) session ID.

72. The device of any one of claims 64 to 71, wherein the header compression parameter is configured based on at least one of:
at least one QoS flow, at least one bearer, a terminal device, and at least one PDU session.

73. The device of any one of claims 64 to 72, wherein the compression module is specifically configured to:
map a data packet corresponding to a header compression object into a sub-object channel corresponding to a same or different context ID.

74. The device of any one of claims 64 to 73, wherein the first configuration information is further used for indicating a mapping mode between a context ID and an Ethernet frame header comprising a VLAN field.

75. The device of claim 74, wherein the first configuration information is specifically used for configuring that:
an Ethernet frame header comprising one VLAN field is mapped to a sub-object channel corresponding to a first context ID;
an Ethernet frame header comprising two VLAN fields is mapped to a sub-object channel corresponding to a second context ID; and
an Ethernet frame header excluding a VLAN field is mapped to a sub-object channel corresponding to a third context ID.

76. The device of any one of claims 64 to 73, wherein the first configuration information is further used for indicating a mapping mode between a context ID and an Ethernet frame header comprising a VLAN field and a mapping mode between a context ID and an Ethernet frame header excluding a VLAN field.

77. The device of claim 76, wherein the first configuration information is specifically used for configuring that:
an Ethernet frame header comprising a VLAN field is mapped to a sub-object channel corresponding to a first context ID; and
an Ethernet frame header excluding a VLAN field is mapped to a sub-object channel corresponding to a third context ID.

78. The device of any one of claims 64 to 77, further comprising a control module configured to activate a header compression function of the Ethernet frame header.

79. The device of claims 78, wherein the control module is specifically configured to activate the header compression function of the Ethernet frame header in a case that the first configuration information is received.

80. The device of claim 78, wherein the control module is specifically configured to activate the header compression function of the Ethernet frame header in a case that a first activation signaling is received, wherein the first activation signaling is used for instructing the device to activate the header compression function of the Ethernet frame header.

81. The device of claim 80, wherein the first activation signaling is at least one of a radio resource control (RRC) message, a media access control (MAC) control element (CE), and downlink control information (DCI).

82. The device of claim 78, wherein the control module is specifically configured to activate the header compression function of the Ethernet frame header according to a preset rule.

83. The device of claim 82, wherein the preset rule indicates that the header compression function of the Ethernet frame header is activated by default; or the preset rule indicates that a header compression function of an Ethernet frame header of a specific terminal device is activated by default; or the preset rule indicates that a header compression function of an Ethernet frame header of a bearer with a robust header compression (RoHC) mode unconfigured is activated by default.

84. The device of any one of claims 64 to 83, wherein the communication module is specifically configured to receive a radio resource control (RRC) message sent by a first device, wherein the RRC message comprises the first configuration information.

85. The device of claim 84, wherein the device is a terminal device, and the first device is an access network device, a core network device, or an application layer device.

86. A wireless communication device, comprising:
a communication module configured to receive first configuration information sent by a first device, wherein the first configuration information is used for configuring a header compression parameter of an Ethernet frame header; and
a decompression module configured to decompress an Ethernet frame header of a received data packet according to the first configuration information.

87. The device of claim 86, wherein the header compression parameter comprises at least one of:
a header compression ID of an Ethernet frame header, a virtual local area network (VLAN) field indication, information of a sub-header to be compressed, field type information for header compression, a maximum number of context IDs, a header compression mode, and a feedback mode;
wherein the header compression ID is used for indicating whether to compress the Ethernet frame header, the field type information for header compression is used for indicating a type of a sub-header to be compressed, the maximum number of context IDs is used for indicating a maximum number of sub-object channels to which a data packet corresponding to a header compression object is capable of being mapped, the header compression mode is used for indicating whether the compression end device performs transition of a compression state according to the feedback mode, the feedback mode is used for indicating a feedback mode used by a decompression end device, the VLAN field indication is used for indicating whether to perform header compression on a VLAN field or whether the Ethernet frame header contains a VLAN field, and the header compression object is used for indicating a unit by which the header compression is performed.

88. The device of claim 87, wherein the field type information for header compression comprises at least one of:
a static class, a static-known class, a static-def class, an inferred class, a changing class, and an unchanging class.

89. The device of claim 87 or 88, wherein the information of the sub-header to be compressed comprises at least one of:
a destination address, a source address, an Ethernet type, an Ethernet length, a tag protocol ID (TP-ID), a precedence code point (PCP), a drop eligible indicator (DEI), and a VLAN ID.

90. The device of any one of claims 87 to 89, wherein the feedback mode comprises at least one of:
a mode in which a feedback data packet needs to be sent as a reply, a mode in which a feedback data packet does not need to be sent as a reply and a mode in which a feedback data packet needs to be sent as a reply under a specific condition.

91. The device of any one of claims 86 to 90, wherein the first configuration information is further used for configuring header compression object information corresponding to the header compression parameter.

92. The device of claim 91, wherein the header compression object information comprises at least one of:
at least one Quality of Service (QoS) flow ID, at least one bearer ID, at least one terminal device ID, and at least one protocol data unit (PDU) session ID.

93. The device of any one of claims 86 to 92, wherein the header compression parameter is configured based on at least one of:
at least one QoS flow, at least one bearer, a terminal device, and at least one PDU session.

94. The device of any one of claims 86 to 93, wherein the first configuration information is further used for indicating a mapping mode between a context ID and an Ethernet frame header comprising a VLAN field.

95. The device of claim 94, wherein the first configuration information is specifically used for configuring that: an Ethernet frame header comprising one VLAN field is mapped to a sub-object channel corresponding to a first context ID; an Ethernet frame header comprising two VLAN fields is mapped to a sub-object channel corresponding to a second context ID; and an Ethernet frame header excluding a VLAN field is mapped to a sub-object channel corresponding to a third context ID.

96. The device of any one of claims 86 to 93, wherein the first configuration information is further used for indicating a mapping mode between a context ID and an Ethernet frame header comprising a VLAN field and a mapping mode between a context ID and an Ethernet frame header excluding a VLAN field.

97. The device of claim 96, wherein the first configuration information is specifically used for configuring that:
an Ethernet frame header comprising a VLAN field is mapped to a sub-object channel corresponding to a first context ID; and
an Ethernet frame header excluding a VLAN field is mapped to a sub-object channel corresponding to a third context ID.

98. The device of any one of claims 86 to 97, further comprising a control module configured to activate a decompression function of the Ethernet frame header.

99. The device of claim 98, wherein the control module is specifically configured to activate the decompression function of the Ethernet frame header in a case that the first configuration information is received.

100. The device of claim 98, wherein the control module is specifically configured to activate the decompression function of the Ethernet frame header in a case that a second activation signaling is received, wherein the second activation signaling is used for instructing the device to activate the decompression function of the Ethernet frame header.

101. The device of claim 100, wherein the second activation signaling is at least one of a radio resource control (RRC) message, a media access control (MAC) control element (CE), and downlink control information (DCI).

102. The device of claim 98, wherein the control module is specifically configured to activate the decompression function of the Ethernet frame header according to a preset rule.

103. The device of claim 102, wherein the preset rule indicates that the decompression of the Ethernet frame header is activated by default; or the preset rule indicates that a decompression function of an Ethernet frame header of a specific terminal device is activated by default; or the preset rule indicates that a decompression function of an Ethernet frame header of a bearer with a robust header compression (RoHC) mode unconfigured is activated by default.

104. The device of any one of claims 86 to 103, wherein the communication module is further configured to send a state report to a compression end device, wherein the state report is used for indicating a decompression result of the data packet by the device.

105. The device of claim 104, wherein the communication module is specifically configured to send the state report to the compression end device under a specific condition.

106. The device of claim 105, wherein the specific condition is one of:
periodic sending;
erroneous decompression of the data packet;
erroneous decompression of the data packet for K times in a row, wherein K is greater than 1;
a change in a compression state of the compression end device;
receiving of an uncompressed data packet;
times of receiving an uncompressed data packet being greater than X, wherein X ≥ 1;
receiving of a first instruction sent by the compression end device, wherein the first instruction is used for instructing the device to send the state report;
a change in a compression state of the device; and
receiving of a specific data packet.

107. The device of claim 106, wherein the compression state comprises at least one of:
an uncompressed state, a partially compressed state, and a fully compressed state.

108. The device of claim 106 or 107, wherein the decompression state comprises at least one of:
a state in which not all of contexts are known or a state in which no decompression is needed;
a state in which part of the contexts can be known or a partially decompressed state; and
a state in which all of the contexts can be known or a fully decompressed state.

109. The device of any one of claims 86 to 108, wherein the communication module is specifically configured to:
receive a radio resource control (RRC) message sent by the first device, wherein the RRC message comprises the first configuration information.

110. The device of claim 109, wherein the device is a terminal device, and the first device is an access network device, a core network device, or an application layer device.

111. A wireless communication device, comprising:
a communication module configured to send first configuration information to a compression end device and/or a decompression end device, wherein the first configuration information is used for configuring a header compression parameter of an Ethernet frame header.

112. The device of claim 111, wherein the header compression parameter comprises at least one of:
a header compression ID of an Ethernet frame header, a virtual local area network (VLAN) field indication, information of a sub-header to be compressed, field type information for header compression, a maximum number of context IDs, a header compression mode, and a feedback mode;
wherein the header compression ID is used for indicating whether to compress the Ethernet frame header, the field type information for header compression is used for indicating a type of a sub-header to be compressed, the maximum number of context IDs is used for indicating a maximum number of sub-object channels to which a data packet corresponding to a header compression object is capable of being mapped, the header compression mode is used for indicating whether to perform transition of a compression state according to the feedback mode, the feedback mode is used for indicating a feedback mode used by the decompression end device, the VLAN field indication is used for indicating whether to perform header compression on a VLAN field or whether the Ethernet frame header contains a VLAN field, and the header compression object is used for indicating a unit by which the header compression is performed.

113. The device of claim 112, wherein the field type information for header compression comprises at least one of: a static class, a static-known class, a static-def class, an inferred class, a changing class, and an unchanging class.

114. The device of claim 112 or 113, wherein the information of the sub-header to be compressed comprises at least one of:
a destination address, a source address, an Ethernet type, an Ethernet length, a tag protocol ID (TP-ID), a precedence code point (PCP), a drop eligible indicator (DEI), and a VLAN ID.

115. The device of any one of claims 112 to 114, wherein the feedback mode comprises at least one of:
a mode in which a feedback data packet needs to be sent as a reply, a mode in which a feedback data packet does not need to be sent as a reply and a mode in which a feedback data packet needs to be sent as a reply under a specific condition.

116. The device of any one of claims 112 to 115, wherein the compression state comprises at least one of:
an uncompressed state, a partially compressed state, and a fully compressed state.

117. The device of any one of claims 111 to 116, wherein the first configuration information is further used for configuring header compression object information corresponding to the header compression parameter.

118. The device of claim 117, wherein the header compression object information comprises at least one of:
at least one Quality of Service (QoS) flow ID, at least one bearer ID, at least one terminal device ID, and at least one protocol data unit (PDU) session ID.

119. The device of any one of claims 111 to 118, wherein the header compression parameter is configured based on at least one of:
at least one QoS flow, at least one bearer, a terminal device, and at least one PDU session.

120. The device of any one of claims 111 to 119, wherein the first configuration information is further used for indicating a mapping mode between a context ID and an Ethernet frame header comprising a VLAN field.

121. The device of claim 120, wherein the first configuration information is specifically used for configuring that:
an Ethernet frame header comprising one VLAN field is mapped to a sub-object channel corresponding to a first context ID;
an Ethernet frame header comprising two VLAN fields is mapped to a sub-object channel corresponding to a second context ID; and
an Ethernet frame header excluding a VLAN field is mapped to a sub-object channel corresponding to a third context ID.

122. The device of any one of claims 111 to 119, wherein the first configuration information is further used for indicating a mapping mode between a context ID and an Ethernet frame header comprising a VLAN field and a mapping mode between a context ID and an Ethernet frame header excluding a VLAN field.

123. The device of claim 122, wherein the first configuration information is specifically used for configuring that:
an Ethernet frame header comprising a VLAN field is mapped to a sub-object channel corresponding to a first context ID; and
an Ethernet frame header excluding a VLAN field is mapped to a sub-object channel corresponding to a third context ID.

124. The device of any one of claims 111 to 123, wherein the compression end device is a terminal device, the decompression end device is a terminal device, and the first device is an access network device, a core network device, or an application layer device.

125. The device of any one of claims 111 to 123, wherein the compression end device is a terminal device, the decompression end device is an access network device, and the first device is an access network device, a core network device, or an application layer device.

126. The device of any one of claims 111 to 123, wherein the compression end device is an access network device, the decompression end device is a terminal device, and the first device is an access network device, a core network device, or an application layer device.

127. A wireless communication device comprising a processor and a memory, wherein the memory is configured to store a computer program, and the processor is configured to call and run the computer program from the memory to execute the method of any one of claims 1 to 22, or the method of any one of claims 23 to 47, or the method of any one of claims 48 to 63.

128. A chip comprising a processor configured to call and run a computer program from a memory to cause a device in which the chip is installed to execute the method of any one of claims 1 to 22, or the method of any one of claims 23 to 47, or the method of any one of claims 48 to 63.

129. A computer readable storage medium configured to store a computer program, which causes a computer to execute the method of any one of claims 1 to 22, or the method of any one of claims 23 to 47, or the method of any one of claims 48 to 63.

130. A computer program product comprising computer program instructions, which cause a computer to execute the method of any one of claims 1 to 22, or the method of any one of claims 23 to 47, or the method of any one of claims 48 to 63.

131. A computer program, which causes a computer to execute the method of any one of claims 1 to 22, or the method of any one of claims 23 to 47, or the method of any one of claims 48 to 63.
